# EUROPÄISCHE PATENTSCHRIFT

(11) **EP 0 785 877 B1**
(45) Veröffentlichungstag und Bekanntmachung des Hinweises auf die Patenterteilung: **22.04.1998**
(21) Anmeldenummer: 95932648.9
(22) Anmeldetag: 01.09.1995
(51) Int. Cl.: B60N 2/08

(54) **VERRIEGELUNGSVORRICHTUNG FÜR FAHRZEUGSITZE**
LOCKING DEVICE FOR VEHICLE SEATS
DISPOSITIF DE VERROUILLAGE POUR SIEGES DE VEHICULES

(30) Priorität: 11.10.1994 DE 4436221
(43) Veröffentlichungstag der Anmeldung: 30.07.1997
(73) Patentinhaber: KEIPER RECARO GmbH & Co., D-42855 Remscheid (DE)
(72) Erfinder: SCHÜLER, Rolf, D-42579 Heiligenhaus (DE); VOSS, Heinz, D-51375 Leverkusen (DE); MITULLA, Gerhard, D-44789 Bochum (DE); STEMMER, Jürgen, D-42119 Wuppertal (DE)
(74) Vertreter: Bartels, Martin Erich Arthur
(86) Internationale Anmeldenummer: EP9503443
(87) Internationale Veröffentlichungsnummer: WO9611123

(56) Entgegenhaltungen:
- EP-A- 0 408 932
- EP-A- 0 567 226
- DE-A- 4 330 870
- DE-A- 4 400 474
- DE-A- 4 444 075

## Beschreibung

Die Erfindung betrifft eine Verriegelungsvorrichtung für Fahrzeugsitze, insbesondere Kraftfahrzeugsitze, welche die Merkmale des Oberbegriffs des Anspruches 1 aufweist (seihe zum Beispiel EP-A-0 408 932). Solche Verriegelungsvorrichtungen werden vorwiegend dazu verwendet, die den Fahrzeugsitz tragende Oberschiene eines Schienenpaares, die längsverschiebbar in einer mit der Fahrzeugstruktur verbundenen Unterschiene geführt ist, in jeder Stellung innerhalb des Verstellbereiches formschlüssig zu verriegeln.

Bei den bekannten Verriegelungsvorrichtungen dieser Art erfordert im Falle einer stufenlosen Längsverstellbarkeit des Sitzes eine spielfreie Verriegelbarkeit in jeder Stellung innerhalb des Längsverstellbereiches eine keilförmige oder konische Anlagefläche des Riegels. Dies hat zur Folge, daß die Riegel, abhängig von ihrer Ausrichtung auf die Rastöffnungen, in diese mehr oder weniger tief eindringen müssen, bis die Anlagefläche in Anlage an der Begrenzungsfläche der den Riegel aufnehmenden Rastöffnung ist. Nachteilig ist hierbei nicht nur, daß der Bauraumbedarf in der Einfallrichtung der Riegel relativ groß ist. Störend sein kann auch dann, wenn die Restöffnungen in einer Schiene vorgesehen sind, daß die Riegelenden mehr oder weniger weit aus der Schiene herausragen. Ferner läßt sich, nicht zuletzt wegen der unterschiedlichen Einfalltiefen, eine formschlüssige Sicherung der Riegel in deren Verriegelungsstellung nicht in einfacher Weise realisieren, so daß praktisch nur die Selbsthemmung als Mittel zur Verhinderung eines Aushebens der Riegel aus den Rastöffnungen bei einer Überlast, wie sie in einem Crashfall auftreten kann, zur Verfügung steht.

Der Erfindung liegt daher die Aufgabe zugrunde, eine Verriegelungsvorrichtung für Fahrzeugsitze zu schaffen, die frei von den vorstehend erwähnten Nachteilen ist. Diese Aufgabe löst eine Verriegelungsvorrichtung mit den kennzeichnenden Merkmalen des Anspruches 1.

Dadurch, daß jeder Riegel oder wenigstens einer seiner Teile zusätzlich zu der Bewegbarkeit für das Einfallen in eine der Rastöffnungen eine Bewegbarkeit aufweist, bei welcher der für eine spielfreie Anlage an der Begrenzungsfläche dieser Rastöffnung vorgesehene Flächenbereich des Riegels in Anlage an die Begrenzungsfläche gebracht wird, ohne die Eindringtiefe des Riegels in die Rastöffnung zu verändern, erreicht man eine gleiche Einfalltiefe aller Riegel, die so gewählt sein kann, daß die Riegelenden nicht oder allenfalls minimal aus den Rastöffnungen herausragen. Ferner lassen sich die Riegel dank der konstant bleibenden Einfalltiefe in sehr einfacher Weise formschlüssig gegen eine Bewegung aus den Rastöffnungen heraus sichern.

Eine derartige Verriegelungsvorrichtung kann in unterschiedlicher Weise ausgebildet sein. Beispielsweise kann zumindest derjenige Abschnitt des Riegels, der in der Verriegelungsstellung in eine der Rastöffnungen eingreift, einen Querschnitt aufweisen, dessen Randlinie zumindest auf einem Teil des Umfangs zwischen einer Stellung geringsten Abstandes von der Längsachse und seiner Stellung größten Abstandes von der Längsachse einen stetig größer werdenden Abstand von der Längsachse hat. Es bedarf dann nur einer Drehung des Riegels, um die Mantelfläche dieses sich in der Rastöffnung befindenden, nockenartigen Abschnittes in Anlage an die Begrenzungsfläche der Rastöffnung zu bringen. Zusätzlich zu der Bewegbarkeit für das Einfallen in eine der Rastöffnungen ist hier eine anders gerichtete Bewegbarkeit der Riegel vorhanden, nämlich ihre Drehbarkeit. Der nockenartige Abschnitt kann einstückig mit dem übrigen, vorzugsweise bolzenförmigen Teil des Riegels ausgebildet oder mit diesem fest verbunden sein, wobei in der Regel für den bolzenförmigen Teil ein halber Durchmesser genügt, der kleiner ist als der größte Abstand der Randlinie des nockenartigen Abschnittes von der Riegellängsachse, beispielsweise gleich dem kleinsten Abstand dieser Randlinie von der Riegellängsachse. Es ist selbstverständlich aber auch möglich, den Durchmesser des bolzenförmigen Teils doppelt so groß zu wählen wie den größten Abstand der Randlinie von der Riegellängsachse.
Der nockenartige Abschnitt kann auch drehbar um die Riegellängsachse auf einen zylindrischen Abschnitt des übrigen Teils des Riegels, oder wenn dieser in der Form eines Bolzens ausgebildet ist, auf diesem gelagert sein, so daß nur der nockenartigen Teil die zusätzliche Drehbewegung ausführt. Ebenso ist es möglich, den in die Rastöffnung eingreifenden, nockenartigen Abschnitt drehbar und axial verschiebbar auf dem übrigen Riegelteil anzuordnen.

Die Spielbeseitigung durch die zusätzliche Bewegung kann auch in der Weise erfolgen, daß der Riegel nach dem Einfallen in eine der Rastöffnungen in Richtung der durch die Rastöffnungen definierten Reihe, also in seiner Querrichtung, bis zur Anlage an der Begrenzungsfläche der Rastöffnung verschoben wird, wozu außer einer eine solche Querverschiebung zulassenden Führung Mittel erforderlich sind, welche diese Querverschiebung bewirken und die in Richtung dieser Querverschiebung wirkenden Kräfte aufzunehmen vermögen. Diese Mittel können durch einen Nocken gebildet sein, der wie der bereits erwähnte nockenartige Abschnitt ausgebildet sein kann und an einer Abstützfläche anliegt. Sofern die Mantelfläche dieses Nockens so ausgeführt ist, daß die Anlage an der Stützfläche selbsthemmend ist, kann dieser Nocken auch die genannte Belastung aufnehmen.
Eine weitere Möglichkeit der Spielbeseitigung durch eine zusätzliche Bewegbarkeit wenigstens eines Teiles des Riegels besteht darin, wenigstens einen Keil vorzusehen, der relativ zu dem in eine der Rastöffnungen einfallenden Teil des Riegels, beispielsweise einem Bolzen, in der Einfallrichtung bewegbar und so angeordnet ist, daß er bei einer Freigabe des Riegels für eine Bewegung in die Verriegelungsstellung in den Zwischenraum zwischen dem Bolzen oder dergleichen und der Begrenzungsfläche der Rastöffnung einfällt, wozu der Keil in gleicher Weise wie der Bolzen oder dergleichen federbelastet sein kann. Wenn der in die Rastöffnungen einfallende Teil des Riegels beispielsweise ein Bolzen ist, kann der Keil durch einen Abschnitt eines auf diesem Bolzen längsverschiebbar gelagerten Ringes gebildet sein, der einen sich in der Einfallrichtung des Riegels verjüngenden Konus bildet. Besonders vorteilhaft ist es, wenn der Keil an die Form des die Anlagefläche für den Keil bildenden Abschnittes der Begrenzungsfläche der Rastöffnungen angepaßt ist. Ist diese Anlagefläche halbzylindrisch, dann ist eine konische Keilfläche günstig. Handelt es sich bei dieser Anlagefläche aber um eine ebene Fläche, dann ist es zweckmäßig, auch die Keilfläche als ebene Fläche auszuführen, was selbstverständlich auch dann möglich ist, wenn der den Keil bildende Teil eine zylindrische Bohrung als Sitz und Lagerfläche hat. Trotz eines im Selbsthemmungsbereich liegenden Konus- oder Keilwinkels kann man auch bei relativ großen Spaltweiten zwischen dem in die Rastöffnung eingefallenen Riegelteil und der Begrenzungsfläche der Rastöffnung mit einem relativ geringen Verschiebeweg des den Keil bildenden Teiles auskommen, wenn man diesen Teil wenigstens zweiteilig ausbildet, wobei beide Teile je einen Keil oder Konus aufweisen.

Sofern eine Drehbewegung als zusätzliche Bewegung oder zur Bewirkung der zusätzlichen Bewegung vorgesehen ist, und bei allen Regeln eine gleiche Drehrichtung vorgesehen werden kann, weist, wenn ein nockenartiger Abschnitt oder Teil Verwendung findet, dieser Abschnitt oder Teil zwei diametral liegende Bereiche der Randlinie seines Querschnittes auf, deren Abstand von der Längsachse im gleichen Umlaufsinne stetig größer wird. Es stehen dann zwei diametral angeordnete Nocken zur Verfügung, wodurch in einfacher Weise gewährleistet ist, daß einer der sich in der Verriegelungsstellung befindenden Riegel eine Verstellbewegung der miteinander verriegelten Teile in der einen und ein anderer Riegel in der anderen Verstellrichtung spielfrei verhindert. Vorzugsweise sind die beiden diametral liegenden Abschnitte der Randlinie punktsymmetrisch zur Längsachse.

Vorteilhaft ist ein spiralförmiger Verlauf der Randlinie.

Um die Riegel oder die nockenartigen Teile nicht gegen eine ungewollte Drehung in ihrer Verriegelungsstellung sichern zu müssen, kann man die Steigung an jeder Stelle des einen stetig zunehmenden Abstand von der Längsachse aufweisenden Abschnittes der Randlinie so wählen, daß der Winkel, den die Randlinie an der Anlagestelle mit der Begrenzungsfläche der Rastöffnung einschließt, im Selbsthemmungsbereich liegt. Hierfür eignet sich beispielsweise eine logarithmische Spirale. Allerdings würde eine ungewollte Drehung nur zu einer geringfügigen Verschiebbarkeit der verriegelten Bauteile führen. Im übrigen würde die Verriegelung voll wirksam bleiben. Die Gefahr, daß die Riegel unbeabsichtigt, beispielsweise infolge einer Überlast, aus den Rastöffnungen austreten, ist bereits dadurch beseitigt, daß die belastete Fläche des letztlich die Belastung aufnehmenden Teils des Riegels, also die Mantelfläche des in die Rastöffnungen eingreifenden Endabschnittes eines Bolzens oder dergleichen oder die Mantelfläche des nockenartigen Abschnitts parallel zur Einfallrichtung verlaufen und deshalb die Belastungskräfte, welche auf die Riegel wirken, keine Komponente in der Einfallrichtung ergeben. Man kann jedoch die Riegel zusätzlich formschlüssig gegen eine Bewegung aus der Verriegelungsstellung heraus mittels einer Sperre sichern, die sehr einfach ausgebildet sein kann, da sie nur für jeden Riegel ein quer zu dessen Verschieberichtung bewegbares Blockierelement aufzuweisen braucht, an dem in seiner Sperrstellung beispielsweise das der Rastöffnung abgekehrte Ende des Riegels anliegt.

Ein bevorzugtes Ausführungsbeispiel weist Merkmale der Ansprüche 14 bis 25 auf. Dieses Ausführungsbeispiel ist sehr raumsparend, wozu beiträgt, daß trotz einer spielfreien Verriegelung in beiden Richtungen und jeder beliebigen Stellung nur vier Riegel benötigt werden. Vorteilhaft ist ferner, daß mit einer sehr einfach ausgebildeten Mechanik die Verriegelung gelöst werden kann.

Im folgenden ist die Erfindung anhand von in der Zeichnung dargestellten Ausführungsbeispielen im einzelnen erläutert. Es zeigen:
- Fig. 1: einen schematisch und unvollständig dargestellten Längsschnitt des ersten Ausführungsbeispiels mit allen Riegeln in der Entriegelungsstellung,
- Fig. 2: einen Längsschnitt entsprechend Fig. 1 mit zwei der Riegel in der Verriegelungsstellung,
- Fig. 3: einen Schnitt nach der Linie III - III der Fig. 2,
- Fig. 4: einen vergrößert dargestellten Ausschnitt aus Fig. 3,
- Fig. 5: einen Schnitt entsprechend Fig. 3 bei einer der Verriegelungsstellung entsprechenden Drehstellung der Riegel,
- Fig. 6: einen vergrößert dargestellten Ausschnitt aus Fig. 5,
- Fig. 7: eine unvollständig dargestellte Seitenansicht des Riegels eines zweiten Ausführungsbeispiels,
- Fig. 8: einen Schnitt nach der Linie VIII - VIII der Fig. 7,
- Fig. 9: einen unvollständig dargestellten Schnitt eines dritten Ausführungsbeispiels in der Entriegelungsstellung,
- Fig.10: einen Schnitt entsprechend Fig. 9 in der Verriegelungsstellung,
- Fig.11: einen Schnitt nach der Linie XI - XI der Fig. 10,
- Fig.12: ein perspektivisch und auseinandergezogen dargestelltes viertes Ausführungsbeispiel mit einem mittels dieses Ausführungsbeispiels verriegelbaren Schienenpaar,
- Fig.13: eine vergrößert dargestellte Seitenansicht des vierten Ausführungsbeispiels,
- Fig.14: einen vergrößert dargestellten Querschnitt nach der Linie XIV-XIV der Fig. 13,
- Fig.15: einen vergrößert dargestellte Querschnitt nach der Linie XV-XV der Fig. 13,
- Fig.16: eine teilweise in Längsrichtung geschnitten dargestellte Seitenansicht des vierten Ausführungsbeispiels,
- Fig.17: eine Draufsicht auf das eine Ende einer der die Riegel belastenden Federn,
- Fig.18: einen unvollständig dargestellten Längsschnitt einer die Rastöffnungen aufweisenden Flachschiene,
- Fig.19: einen Schnitt nach der Linie XIX - XIX der Fig. 18,
- Fig.20: einen Schnitt nach der Linie XX - XX der Fig. 18,
- Fig.21: eine Seitenansicht der die Führungskanäle für die Riegel aufweisenden Halterung,
- Fig.22: eine Draufsicht auf die Oberseite der Halterung,
- Fig.23: einen vergrößert dargestellten Ausschnitt aus Fig. 22,
- Fig.24: eine Seitenansicht eines der Riegel,
- Fig.25: eine Draufsicht auf die Unterseite des in Fig. 24 dargestellten Riegels,
- Fig.26: eine Draufsicht auf die Oberseite des in Fig. 24 dargestellten Riegels,
- Fig.27: eine perspektivisch dargestellte Ansicht des Schiebers des vierten Ausführungsbeispiels,
- Fig.28: eine perspektivisch dargestellte Ansicht des Hubkörpers des vierten Ausführungsbeispiels,
- Fig.29: eine Seitenansicht des Hubkörpers,
- Fig.30: eine Draufsicht von oben auf den Hubkörper,
- Fig.31: eine perspektivisch dargestellte Ansicht der Haltevorrichtung,
- Fig.32: einen Längsschnitt der Haltevorrichtung,
- Fig.33: eine Draufsicht auf die Oberseite der Haltevorrichtung.

Eine Verriegelungsvorrichtung, mittels deren zwei relativ zueinander translatorisch und stufenlos verstellbare Teile eines Fahrzeugsitzes, beispielsweise die Oberschiene und die Unterschiene eines Sitzschienenpaares, in jeder Stellung innerhalb des Verstellbereiches formschlüssig und spielfrei verriegelbar sind, weist eine Schiene 1 auf, die mit einem der beiden miteinander zu verriegelnden Teile fest verbunden ist oder durch einen dieser beiden Teile gebildet sein kann. Die Schiene 1 ist mit einer in Schienenlängsrichtung verlaufenden Reihe von gleich ausgebildeten Rastöffnungen 2 versehen. Zwischen je zwei unmittelbar aufeinanderfolgenden Rastöffnungen 2 ist je ein Steg 3 vorhanden. Alle Stege 3 sind gleich ausgebildet.

Am anderen der beiden miteinander zu verriegelnden Teile ist eine Halterung 4 für drei gleich ausgebildete Riegel 5 vorgesehen, die in der Erstreckungsrichtung der Schiene 1 hintereinander mit gleichen Abständen zwischeneinander angeordnet sind, und zwar derart, daß sie alle auf die durch die Rastöffnungen 2 und die Stege 3 gebildete Zone ausgerichtet sind. Ihre Längsachse verläuft lotrecht zu der ihnen zugekehrten Seite der Schiene 1.

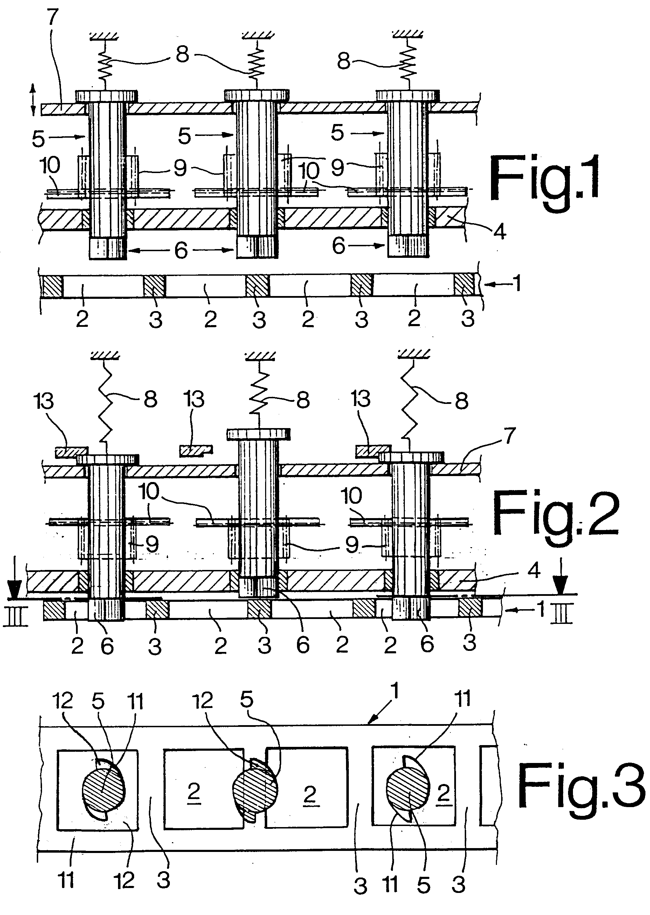

Die Größe der Rastöffnungen 2, die Breite der Stege 3 und die Anordnung der Riegel 5 sind in bekannter Weise so gewählt, daß in jeder Stellung der Schiene 1 relativ zur Halterung 4 zwei der Riegel 5 in je eine der Rastöffnungen 2 eingreifen können. Bei der in den Fig. 1 und 2 dargestellten Stellung können die beiden äußeren Riegel 5 in je eine der Rastöffnungen 2 eingreifen, wohingegen der mittlere Riegel 5 auf einen der Stege 3 ausgerichtet ist.

Bis auf den für den Eingriff in die Rastöffnungen 2 vorgesehenen Endabschnitt 6 sind die Riegel 5 je als zylindrische Bolzen ausgebildet, der längsverschiebbar und drehbar in je einem Lager oder einer Bohrung der Halterung 4 gelagert ist. Um alle Riegel 5 gemeinsam in ihre in Fig. 1 dargestellte Entriegelungsstellung bewegen und gemeinsam für eine Verriegelungsbewegung freigeben zu können, ist eine Aushebevorrichtung 7 vorgesehen, die, wie die Fig. 1 und 2 zeigen, im Ausführungsbeispiel durch eine in Längsrichtung der Riegel 5 bewegbare, parallel zur Halterung 4 und der Schiene 1 verlaufende Aushebeschiene gebildet ist. Diese Aushebeschiene ist mit Bohrungen für den Durchtritt der Riegel 5 versehen, die mit einem Kopf an der der Halterung 4 abgewandten Seite der Aushebeschiene anliegen können. Gegen den Kopf jedes der Riegel 5 drückt eine vorgespannte Feder 8 mit einer Kraftrichtung gegen die Schiene 1 hin.

Auf jedem der Riegel 5 ist in demjenigen Abschnitt, der stets zwischen der Halterung 4 und der Aushebevorrichtung 7 liegt, je ein Zahnrad 9 fest angeordnet, das in jeder Stellung des Riegels 5 mit einer parallel zur Halterung 4 längsverschiebbaren Zahnstange 10 kämmt. Die Zahnstangen 10 sind unabhängig voneinander verschiebbar und bilden zusammen mit dem zugeordneten Zahnrad 9 einen Drehantrieb. Selbstverständlich könnte statt eines solchen Drehantriebes auch ein anders ausgebildeter Drehantrieb, beispielsweise ein radial vom Riegel 5 abstehender Schwenkarm, vorgesehen sein.

Für eine Verstellung der normalerweise miteinander verriegelten Teile, also einer Verschiebung der Schiene 1 in ihrer Längsrichtung relativ zu den Riegeln 5, müssen zunächst alle Riegel 5 entgegen der Kraft der sie belastenden Federn 8 in die in Fig. 1 dargestellte Entriegelungsstellung gebracht werden, was mittels der Aushebevorrichtung 7 erfolgt, welche in Längsrichtung der Riegel 5 verschiebbar ist. Es sei angenommen, daß nach der Längsverstellung der mittlere Riegel 5 auf einen der Stege 3 ausgerichtet ist. Die beiden anderen Riegel 5 sind dann auf je eine der Rastöffnungen 2 ausgerichtet. Wird nun die Aushebevorrichtung 7 freigegeben, dann verschieben die Federn 8 die Riegel 5 gegen die Schiene 1 hin. Gleichzeitig bewegt sich die Aushebevorrichtung 7 in der gleichen Richtung. Der mittlere Riegel 5 kommt dabei in Anlage an einen der Stege 3, wohingegen die beiden anderen Riegel 5 in je eine der Rastöffnungen 2 eindringen, jedoch nur soweit, daß sie nicht oder allenfalls ganz wenig über die der Aushebevorrichtung 7 abgekehrte Seite der Schiene 1 überstehen. Alle sich in der Verriegelungsstellung befindenden Riegel 5 haben also die gleiche Eindringtiefe. Die Zahnstangen 10 beeinträchtigen diese Längsverschiebung der Riegel 5 nicht, da ihre Zähne sowie diejenigen der Zahnräder 9 parallel zur Verschieberichtung der Riegel 5 verlaufen.

Wie die Fig. 3 bis 6 zeigen, haben die Endabschnitte 6 der Riegel 5 einen Querschnitt, dessen Randlinie zwei Abschnitte aufweist, die punktsymmetrisch zur Längsachse des Riegels 5 sind. Im Ausführungsbeispiel ist sogar die eine Hälfte der Randlinie punktsymmetrisch zur anderen Hälfte.

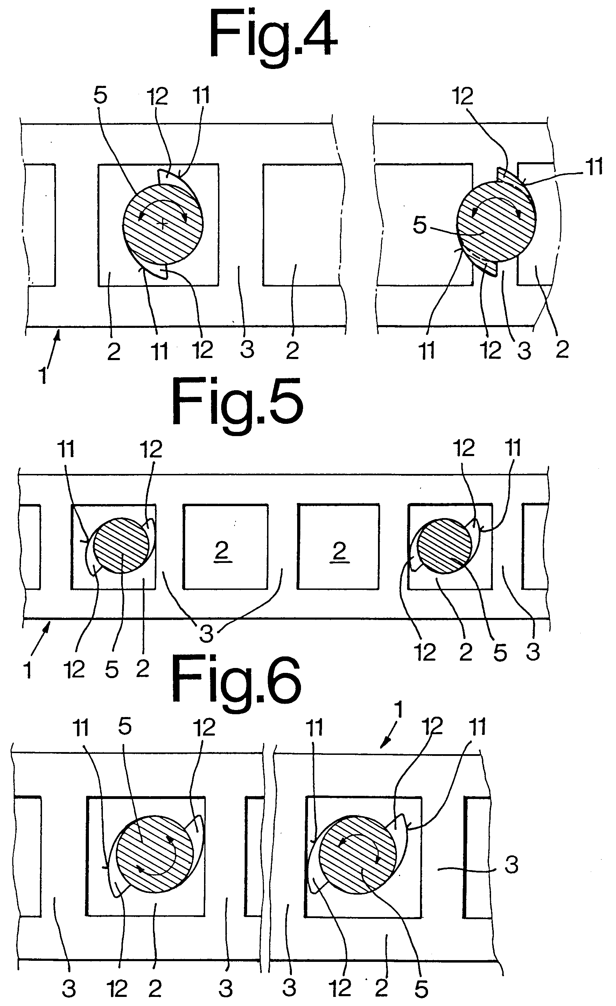

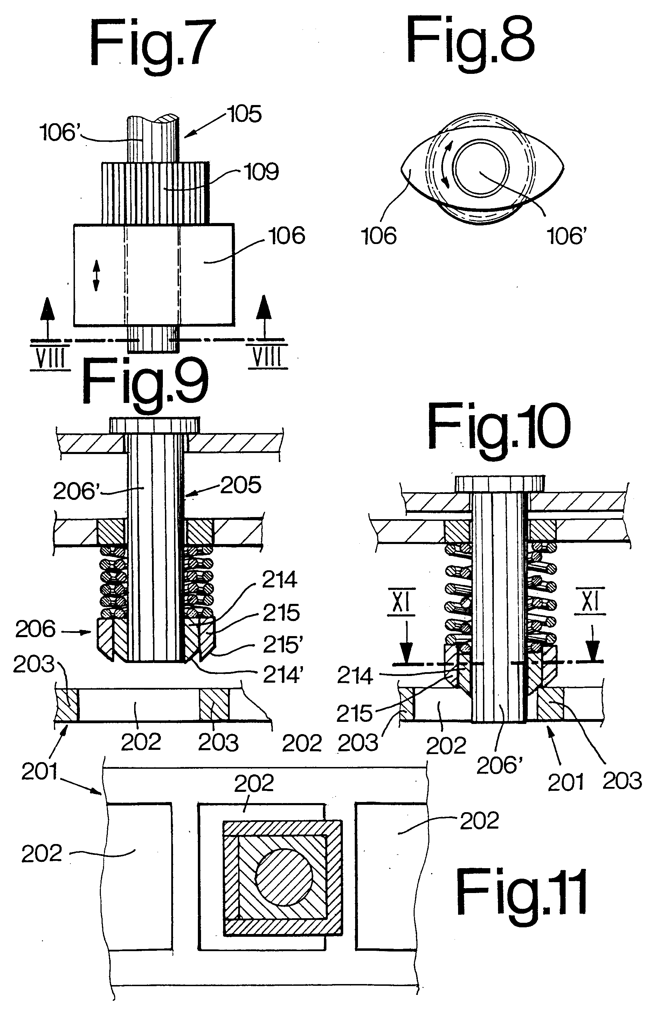

Wie insbesondere die Fig. 4 und 6 zeigen, verlaufen die beiden Hälften der Randlinie von zwei diametral und auf der durch den zylindrischen Teil definierten Kreislinie liegenden Punkten aus längs je einer logarithmischen Spirale 11 mit derselben Umlaufrichtung zum einen bzw. anderen von zwei ebenfalls diametral angeordneten Punkten, in denen die Spiralen 11 den größten Abstand von der Längsachse des Riegels 5 haben. Diese Punkte sind gegenüber den Ausgangspunkten der logarithmischen Spiralen 11 in der Umlaufrichtung um beispielsweise 90° versetzt. Hier gehen die logarithmischen Spiralen 11 in eine Ausrundung und dann in einen diese Ausrundung mit dem Ausgangspunkt der anderen Spirale 11 bildenden Abschnitt über. Die Endabschnitte 6 bilden also zwei diametral angeordnete Nocken 12, deren eine Flanke der logarithmischen Spirale 11 folgt.

Nachdem die beiden äußeren Riegel 5 in die Rastöffnungen 2 eingedrungen sind, wie dies Fig. 2 zeigt, werden alle Riegel 5 bei einer Blickrichtung gemäß Fig. 3 im Uhrzeigersinn gedreht, indem die Zahnstangen 10 nach rechts bei einer Blickrichtung gemäß Fig. 2 bewegt werden. Diese Drehbewegung führt, wie die Fig. 5 und 6 zeigen, bei dem in Fig. 2 links dargestellten Riegel 5 dazu, daß der eine Nocken 12 mit seiner spiralförmig verlaufenden Flanke in Anlage an den rechts von ihm sich befindenden Steg 3 kommt, wohingegen von dem in Fig. 2 rechts dargestellten Riegel 5 der andere Nocken 12 in Anlage an den links von diesem Riegel 5 sich befindenden Steg 3 gelangt. Der links dargestellte Riegel 5 sichert also, sobald er die in Fig. 5 dargestellte Verriegelungsstellung erreicht hat, die Schiene 1 spielfrei gegen eine Verschiebung nach links, wohingegen der rechts dargestellte Riegel 5 in seiner Verriegelungsstellung die Schiene 1 spielfrei gegen eine Verschiebung nach rechts sichert.

Da der Winkel, den der am Steg 3 anliegende Nocken 12 im Bereich der Anlagefläche mit dem Steg 3 einschließt, innerhalb des Selbsthemmungsbereiches liegt, führt eine Belastung in Längsrichtung der Schiene 1 nicht zu einer Drehbewegung der Riegel 5. Allerdings wäre die Sicherheit der Verriegelung nicht gefährdet, wenn eine Belastung in Längsrichtung der Schiene 1 dennoch zu einer Drehbewegung der Riegel 5 führen würde, weil die dann erfolgende Relativbewegung zwischen der Schiene 1 und den Riegeln 5 nur zu einer geringfügigen Verschiebung führen würde, nämlich zu einer Verschiebung bis zur Anlage der Stege 3 an den Endabschnitten 6 im Bereich der Anfangsstellen der Spiralen 11.

Da die Flanken der Nocken 12 parallel zu der Längsachse der Riegel 5 verlaufen, entsteht bei einer Belastung der Riegel 5 in Längsrichtung der Schiene 1 keine Kraftkomponente in Richtung der Riegellängsachse. Die Riegel 5 können deshalb nicht ungewollt aus den Rastöffnungen 2 herausgedrückt werden. Man kann aber, wie in Fig. 2 angedeutet, in einfacher Weise die Riegel 5 in der Verriegelungsstellung formschlüssig gegen eine Bewegung in die Entriegelungsstellung sichern. Hierzu braucht nur jedem Riegel 5 ein Blockierelement 13 zugeordnet zu werden, an dem in seiner Blockierstellung beispielsweise der Kopf des Riegels 5 anliegt. Ein solches Blockierelement 13 kann beispielsweise durch einen Schwenkhebel gebildet werden, der in die Verschiebebahn des Kopfes des zugeordneten Riegels 5 geschwenkt werden kann, wenn der Riegel 5 sich in seiner Verriegelungsstellung befindet.

Sofern die Riegel 5 nicht nur drehbar, sondern zusätzlich querverschiebbar in Längsrichtung der Schiene 1 in der Halterung 4 geführt wären, könnte ihr Endabschnitt 6 zylindrisch ausgebildet sein. Die Querverschiebung könnte dann mit Hilfe von Nocken an den Riegeln 5 erfolgen, die bei einer Drehbewegung der Riegel 5 an Stützflächen an liegen und dabei den zugehörigen Riegel 5 von dieser Stützfläche wegschieben. Wäre ein solcher Nocken drehbar auf dem Riegel 5 gelagert und für seinen Drehantrieb mit einem ein Zahnrad bildenden Abschnitt ausgebildet, dann wäre nur eine Drehbewegung des Nockens erforderlich, nicht aber eine Drehbewegung des Riegels. Dieser könnte dann insbesondere im Bereich seines in die Rastöffnungen einfallenden Endabschnittes eine von der Kreisform abweichende Querschnittsform haben. Insbesondere könnte dieser Endabschnitt an die Form der Anlagefächen der Rastöffnungen für den Riegel angepaßt sein, also beispielsweise ebene Flächen aufweisen.

Die Fig. 7 und 8 zeigen eine Ausführungsform eines Riegels 105, die sich von den bisher beschriebenen Ausführungsformen dadurch unterscheidet, daß der nockenartige Teil 106 zumindest drehbar auf dem bolzenförmigen Teil 106' des Riegels 105 angeordnet ist. Der nockenartige Teil 106 kann zusätzlich axial verschiebbar auf dem bolzenförmigen Teil 106' gelagert sein. Da letzterer letztendlich die bei einer Beanspruchung der Verriegelung auftretenden Kräfte aufnehmen muß, während der nockenartige Teil 106 die Spielfreiheit der Verriegelung bewirkt, kann man hier von einer Trennung der beiden Funktionen oder einer Verteilung der beiden Funktionen auf zwei Bauteile sprechen.

Ist der nockenartige Teil 106 nur drehbar, aber axial unverschiebbar, auf dem bolzenförmigen Teil 106' angeordnet, fallen beide bei einer Freigabe der Verriegelungsvorrichtung unter der Kraft einer vorgespannten Feder in eine der Rastöffnungen ein, wie dies auch bei dem Ausführungsbeispiel gemäß den Fig. 1 bis 6 der Fall ist. Ist hingegen die Anordnung des nockenartigen Teils 106 auf dem bolzenförmigen Teil 106' so gewählt, daß auf letzterem der nockenartige Teil 106 längsverschiebbar ist, ist für den nockenartigen Teil 106 eine separate Feder erforderlich. Für das Ausheben aus der Rastöffnung braucht man jedoch keine zusätzliche Aushebevorrichtung, weil der bolzenförmige Teil 106' mit einem Mitnehmer für den nockenartigen Teil 106 versehen sein kann.

Für die Drehbewegung des nockenartigen Teils 106 kann sich beispielsweise an dessen der Schiene abgekehrtes Ende ein mit ihm fest verbundenes Zahnrad anschließen, mit dem wie bei dem Ausführungsbeispiel gemäß den Fig. 1 bis 6 eine Zahnstange kämmt.
Für die Kontur des nockenartigen Teils 106 gelten die gleichen Grundsätze wie für die Kontur des Endabschnittes 6 der Riegel des ersten Ausführungsbeispiels. Auch hinsichtlich weiterer Einzelheiten, beispielsweise der Anordnung der Riegel bezüglich der Schiene und deren Rastöffnungen, bestehen keine Unterschiede zu dem ersten Ausführungsbeispiel. Ebenso kann wie dort eine Sicherung gegen eine ungewollte Axialverschiebung des bolzenförmigen Teils 106' vorgesehen sein, obgleich bei einer Belastung der Verriegelungsvorrichtung auf den bolzenförmigen Teil 106' keine Axialkomponente einwirkt.

Die Fig. 9 und 10 zeigen schematisch und unvollständig ein drittes Ausführungsbeispiel im entriegelten bzw. verriegelten Zustand. Auch dieses dritte Ausführungsbeispiel unterscheidet sich von dem Ausführungsbeispiel gemäß den Fig. 1 bis 6 nur durch andere Mittel der Riegel zur Spielbeseitigung, weshalb im folgenden dieses Ausführungsbeispiel nur hinsichtlich der vorhandenen Unterschiede erläutert ist. Wegen der übrigen Einzelheiten wird auf die Ausführungen zu dem ersten Ausführungsbeispiel Bezug genommen.

Bei diesem dritten Ausführungsbeispiel ist als zusätzliche Bewegbarkeit keine Drehbarkeit erforderlich. Jeder Riegel 205 besteht deshalb aus einem stabförmigen Teil 206', dessen Funktion das Verriegeln ist, und einem im Ausführungsbeispiel zweiteiligen Bauteil 206, welches die Funktion der Spielfreiheit der Verriegelung erfüllt. Die stabförmigen Teile 206' der Riegel 205 haben die gleiche Anordnung relativ zueinander und zu der Schiene 201, welche wie die Schiene 1 ausgebildet ist, wie dies bei dem Ausführungsbeispiel gemäß den Fig. 1 bis 6 der Fall ist. Die stabförmigen Teile 206' brauchen aber keine zylindrischen Bolzen zu sein, da sie keine Drehung ausführen. Sie können deshalb auch beispielsweise eine polygone Berandung ihrer Querschnittsfläche haben.

Das Bauteil 206 besteht im Ausführungsbeispiel aus einem inneren Keilkörper 214 und einem äußeren Keilkörper 215. Der innere Keilkörper 214 ist längsverschiebbar auf dem stabförmigen Teil 206' angeordnet und zu diesem Zwecke mit einer zentralen Durchgangsbohrung versehen. Sein Außenprofil ist im Ausführungsbeispiel rechteckförmig, könnte aber auch kreisförmig sein. Wie Fig. 9 zeigt, bilden die beiden in Schienenquerrichtung verlaufenden Schenkel des inneren Keilkörpers 214 auf einem Teil ihrer in Längsrichtung des stabförmigen Teils 206' gesehenen Erstreckung je einen Keil 214', der sich gegen das in Eingriff mit den Rastöffnungen 202 kommenden Endes des stabförmigen Teils 206' verjüngt. Die gegenüber der Längserstreckung des stabförmigen Teils 206' geneigten Keilflächen weisen in Längsrichtung der Schiene 201. Es sind deshalb diese Keilflächen, welche in Anlage an die Stege 203 kommen und dadurch die Speilfreiheit der Verriegelung bewirken, wie dies Fig. 10 zeigt. Da es sich bei diesen Keilflächen um ebene Flächen handelt, kommt es zu einer linienförmigen Berührung mit den Stegen 203. Wären die Keilflächen durch eine Konusfläche gebildet, dann hätte man bei geradlinigen Stegen nur eine Punktberührung.

Auf der Außenmantelfläche des inneren Keilkörpers 214 ist in Längsrichtung des stabförmigen Teils 206' verschiebbar der äußere Keilkörper 215 gelagert, der deshalb eine zentrale Ausnehmung aufweist, die an das Außenprofil des inneren Keilkörpers 214 angepaßt ist. Das Außenprofil des äußeren Keilkörpers 215 ist, wie Fig. 11 zeigt, ebenfalls rechteckförmig. Wie den Fig. 9 und 10 zu entnehmen ist, sind auch bei dem äußeren Keilkörper 215 die in Schienenquerrichtung verlaufenden Abschnitte als Keile 215' ausgebildet, deren geneigte Keilfäche parallel zu der benachbarten Keilfläche der Keile 214' verlaufen Die Keile 215' haben wie die Keile 214' einen innerhalb des Selbsthemmungsbereiches liegenden Keilwinkel, damit die Keilkörper 214 und 215 nicht durch eine in Schienenlängsrichtung wirksame Belastung außer Eingriff mit den Rastöffnungen 202 kommen können. Die Zahl der erforderlichen Keilkörper hängt vom zulässigen maximalen Verschiebeweg und von der maximalen Größe der zu überbrückenden Spaltweite zwischen dem stabförmigen Teil 206' und dem benachbarten Steg 203 ab. Die Keile 215' kommen, wie Fig. 10 erkennen läßt, nur dann zur Wirkung, wenn die Spaltweite größer ist als die in Schienenlängsrichtung gemessene maximale Dicke des Keiles 214'.

Wie der stabförmige Teil 206' sind auch die beiden Keilkörper 214 und 215 gegen die Schiene 201 hin federbelastet. Bei einer Freigabe der Verriegelungsvorrichtung für den Übergang in den verriegelten Zustand wird deshalb der stabförmige Teil 206 dann, wenn er auf eine der Rastöffnungen 202 ausgerichtet ist, in die in Fig. 10 dargestellte Verriegelungsstellung gebracht, in welcher das freie Ende des stabförmigen Teils 206' nicht oder nicht wesentlich über die Unterseite der Schiene 201 übersteht. Sofern nicht beide Keilkörper 214 und 215 in diese Rastöffnung 202 eindringen können, kommt der äußere Keilkörper 215 in Anlage an einen der Stege 203, während der innere Keilkörper 214 in den Spalt zwischen dem stabförmigen Teil 206' und dem Steg 203 so tief eindringt, bis er am Steg 203 anliegt und damit die Verriegelung spielfrei ist. Kann der stabförmige Teil 206' in keine der Rastöffnungen 202 einfallen, kommt er ebenso wie die beiden Keilkörper 214 und 215 in Anlage an die Oberseite einer der Stege 203.

Alle stabförmigen Teile 206' der Riegel 205 werden gemeinsam wie bei dem ersten Ausführungsbeispiel mittels einer Aushebevorrichtung 207 ausgehoben. Damit dabei auch die Keilkörper 214 und 215 ausgehoben werden, haben beide nach innen vorspringende Mitnehmerzapfen, welche in Längsnuten des stabförmigen Teils 206' bzw. des inneren Keilkörpers 214 eingreifen und so ausgeführt sind, daß die Bewegung relativ zum stabförmigen Teil 206' in Einfallrichtung nicht behindert wird.

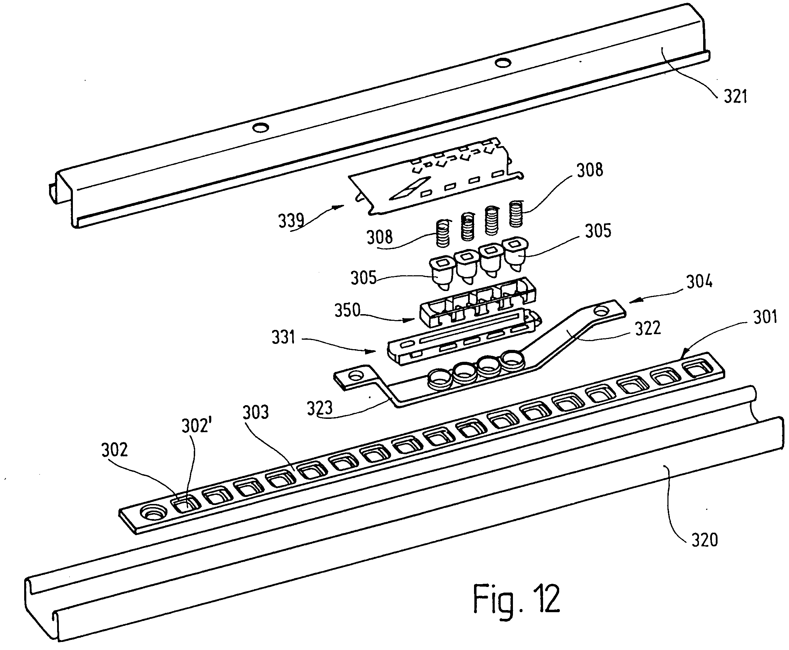

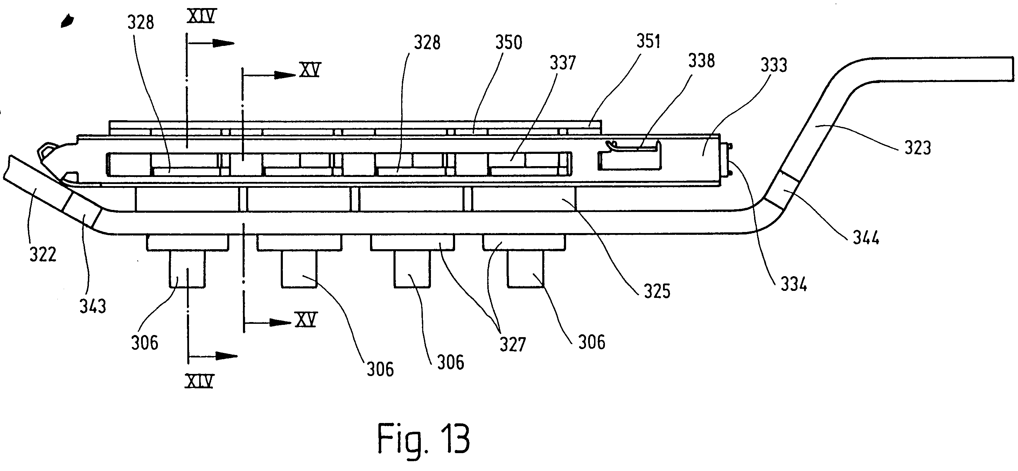

Das in den Fig. 12 bis 33 dargestellte vierte Ausführungsbeispiel der erfindungsgemäßen Verriegelungsvorrichtung ist für den Einbau in eine Sitzschiene ausgebildet, die in bekannter Weise aus einer mit der Fahrzeugstruktur zu verbindenden Unterschiene 320 und einer in ihr längsverschiebbar geführten Oberschiene 321 besteht, welche mit der Struktur des Sitzes zu verbinden ist. Die Verriegelungsvorrichtung erlaubt eine stufenlose Längseinstellung des Fahrzeugsitzes und eine spielfreie sowie formschlüssige Verriegelung der Oberschiene 321 mit der Unterschiene 320 in jeder beliebigen Stellung innerhalb des Einstellbereiches.

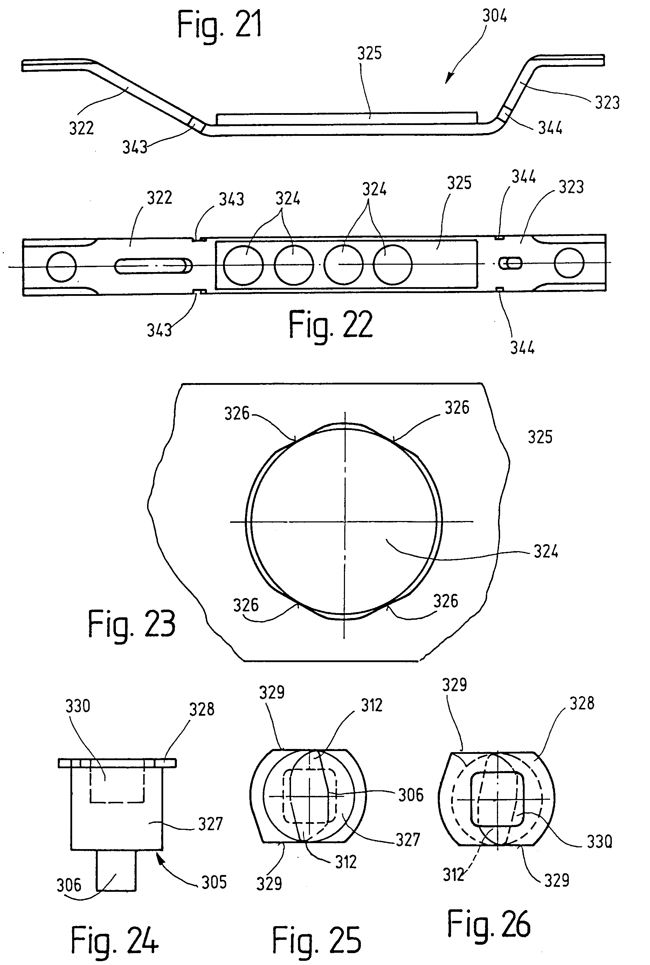

Im Inneren der Unterschiene 320 ist an deren Jochteil eine Flachschiene 301 festgelegt, die mit einer in Schienenlängsrichtung verlaufenden Reihe von Rastöffnungspaaren 302, 302' versehen ist. Zwischen je zwei unmittelbar aufeinanderfolgenden Rastöffnungspaaren 302, 302' ist je ein Steg 303 vorhanden. Alle Stege 303 sind gleich ausgebildet. Wie insbesondere die Fig. 12 und 18 zeigen, sind die Rastöffnungen 302 in einer oberen Ebene angeordnet und auf je eine der in einer unteren Ebene angeordneten Rastöffnungen 302' ausgerichtet. Jede der Rastöffnungen 302 und 302' erstreckt sich über die halbe Dicke der Flachschiene 301 und hat ein Querschnittsprofil in Form eines Rechteckes mit ausgerundeten Ecken. Die Abmessung in Querrichtung der Flachschiene 301 ist bei allen Rastöffnungen 302 und 302' gleich groß. Hingegen ist die in Schienenlängsrichtung gemessene Länge der in der oberen, der Oberschiene 321 zugekehrten Ebene liegenden Rastöffnungen 302 größer als die entsprechende Länge der in der unteren Ebene liegenden Rastöffnungen 302'.

Der mit der Oberschiene 302 zu verbindende Teil der Verriegelungsvorrichtung weist eine für alle Riegel 305 gemeinsame Halterung 304 auf Letztere besteht aus einem aus einer Flachschiene gebogenen Bügel, dessen einer Schenkel 322 eine unter einem Winkel von 30° ansteigende Führungsfläche bildet. Der Endabschnitt des Schenkels 322 ist ebenso wie der Endabschnitt des anderen, steileren Schenkels 323 an die Unterseite des Jochteils der Oberschiene 321 anlegbar und mit letzterer fest verbindbar. Der Jochteil des Bügels ist mit vier in seiner Längsrichtung nebeneinander angeordneten Führungskanälen 324 versehen, in denen je einer der Riegel 305 drehbar und axial verschiebbar geführt wird. Zum Zwecke der axialen Verlängerung der Führungskanäle 324 ist, wie Fig. 21 zeigt, auf den Jochabschnitt des Bügels eine Flachleiste 325 aufgeschweißt. Wie Fig. 23 zeigt, haben die vier gleich ausgebildeten Führungskanäle 324 ein Querschnittsprofil in Form eines Kreises mit vier Abflachungen 326, die sowohl zur Längsrichtung der Flachleiste 325 als auch zu deren Querrichtung symmetrisch liegen und zwei Keile definieren, von denen der eine gegen das eine und der andere gegen das andere Ende der Flachleiste 325 hin sich verjüngt. Die Abstände zwischen je zwei unmittelbar aufeinanderfolgenden Führungskanälen 324 sind gleich groß und so gewählt, daß in jeder beliebigen Längseinstellung der Oberschiene 321 innerhalb deren Einstellbereiches jeweils zwei der vier Riegel 305 auf je eines der Paare von Rastöffnungen 302 und 302' ausgerichtet und wenigstens in die Rastöffnung 302 einzufallen vermag.

Wie insbesondere die Fig. 24 bis 26 zeigen, weist jeder der gleich ausgebildeten Riegel 305 einen zylindrischen Mittelabschnitt 327 auf, dessen Durchmesser so gewählt ist, daß er etwas Spiel in dem ihn aufnehmenden Führungskanal 324 hat. An das gegen die Unterschiene 320 weisende Ende des Mittelabschnittes 327 schließt sich ein Endabschnitt 306 an, der zwei zur Drehachse des Riegels 205 punktsymmetrische Nocken 312 bildet. Die Begrenzungsfläche beider Nocken 312 weist, wie Fig. 25 zeigt, einen vom Anfang zum Ende des Nockens hin stetig größer werdenden Abstand von der Drehachse des Riegels 305 auf. Wie Fig. 25 ferner zeigt, ist der größte Durchmesser des Endabschnittes 306 etwa gleich dem Durchmesser des Mittelabschnittes 327.

An das andere Ende des Mittelabschnittes 327 schließt ein radial nach außen überstehender Flansch 328 an, der dort, wo der Endabschnitt 306 sich bis zur Mantelfläche des Mittelabschnittes 327 erstreckt, je eine Abflachung 329 besitzt.

Die beiden parallel zueinander verlaufenden Abflachungen 329 tangieren die Mantelfläche des Mittelabschnittes 327. Gegen die in Fig. 25 unten liegende Abflachung 329 hin nimmt die Breite des Flansches 328 zu.

Von der Stirnseite des Flansches 328 her dringt in den Flansch 328 und den Mittelabschnitt 327 ein zentraler Aufnahmekanal 330 ein, der, wie Fig. 26 zeigt, einen Querschnitt in Form eines Quadrates mit abgerundeten Ecken hat und im Abstand vom Endabschnitt 306 endet.

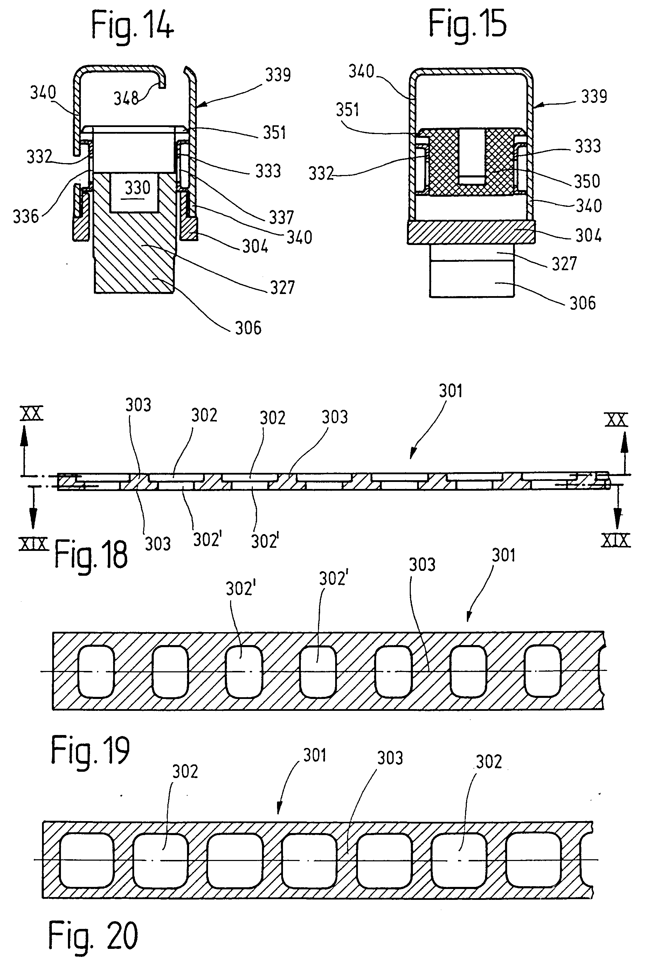

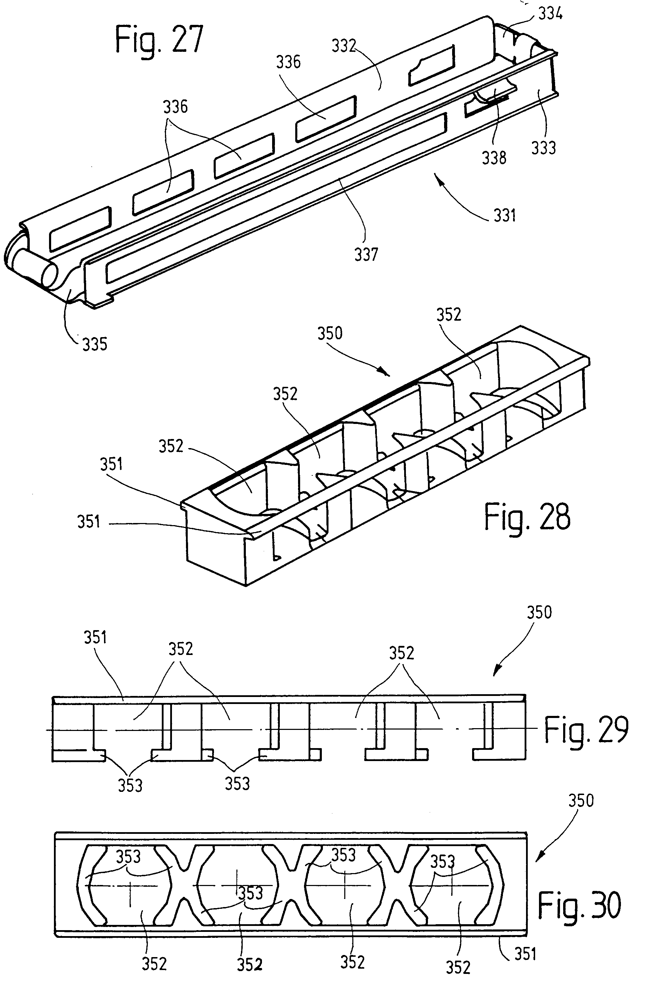

Unmittelbar über der Flachleiste 325 der Halterung 304 ist ein als Ganzes mit 331 bezeichneter Schieber angeordnet, der aus Blech besteht und, wie Fig. 27 zeigt, zwei senkrecht zu der von der Flachleiste 325 definierten Ebene verlaufende Seitenschienen 332 und 333 aufweist, die an ihren beiden Enden durch je einen Querteil 334 bzw. 335 starr miteinander verbunden sind. Sowohl der obere als auch der untere Längsrand beide Seitenschienen 332 und 333 ist nach außen abgewinkelt, was auch den Fig. 14 und 15 zu entnehmen ist. Die Seitenschiene 332 ist mit vier in ihrer Längsrichtung im Abstand voneinander angeordneten, rechteckförmigen Fenstern 336 versehen, von denen jedes auf den Flansch 328 eines der Riegel 305 ausgerichtet und so dimensioniert ist, daß bei einer Drehbewegung des Riegels 305 der Flansch 328 das zugeordnete Fenster 336 durchgreifen kann. Statt der Fenster 336 ist die andere Seitenschiene 333 mit einem auf die Fenster 326 ausgerichteten, durchgehenden Längsschlitz 337 versehen, den der Flansch 328 jedes Riegels 305 durchgreifen kann.

An dem in Fig. 27 rechts dargestellten Ende ist aus beiden Seitenschienen 332 und 333 je eine Führungsnase 338 herausgebogen, deren Überstand über die Seitenschiene größer ist als der Überstand der abgebogenen Randzonen.

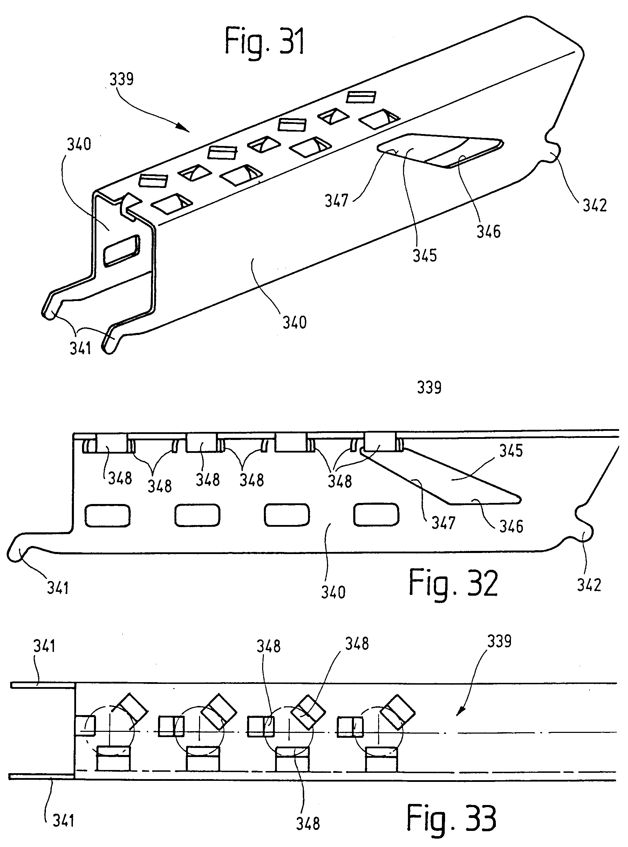

Der Schieber 331 ist in seiner Längsrichtung sowie der Einfall- und Ausheberichtung der Riegel 305 bewegbar in einem aus Blech bestehenden Federgehäuse 339 angeordnet, das, wie insbesondere Fig. 31 zeigt, ein U-förmiges, zur Halterung 304 hin offenes Querschnittsprofil hat. Die Innenflächen der beiden parallel zueinander verlaufenden Schenkel 340 bilden, wie die Fig. 14 und 15 zeigen, die Führungsflächen für die nach außen abgebogenen Längskanten der Seitenschienen 332 und 333. An den beiden Enden des Federgehäuses 339 sind an die beiden Schenkel 340 Vorsprünge 341 bzw. 342 angeformt, welche in seitliche Nuten 343 des flacheren Schenkels 322 bzw. Nut 344 des steileren Schenkels 323 einrastbar sind.

Für den Eingriff der Führungsnasen 338 des Schiebers 331 sind die Schenkel 340 des Federgehäuses 339 mit je einem Fenster 345 versehen, das eine Auflagefläche für die eingreifende Führungsnase 338 bildet, die sich aus einem parallel zur Längsrichtung des Schiebers 331 verlaufenden Abschnitt 346 und einem sich daran anschließenden Rampenabschnitt 347 besteht, der parallel zur der vom Schenkel 322 gebildeten Führungsfläche für das andere Ende des Schiebers 331 verläuft.

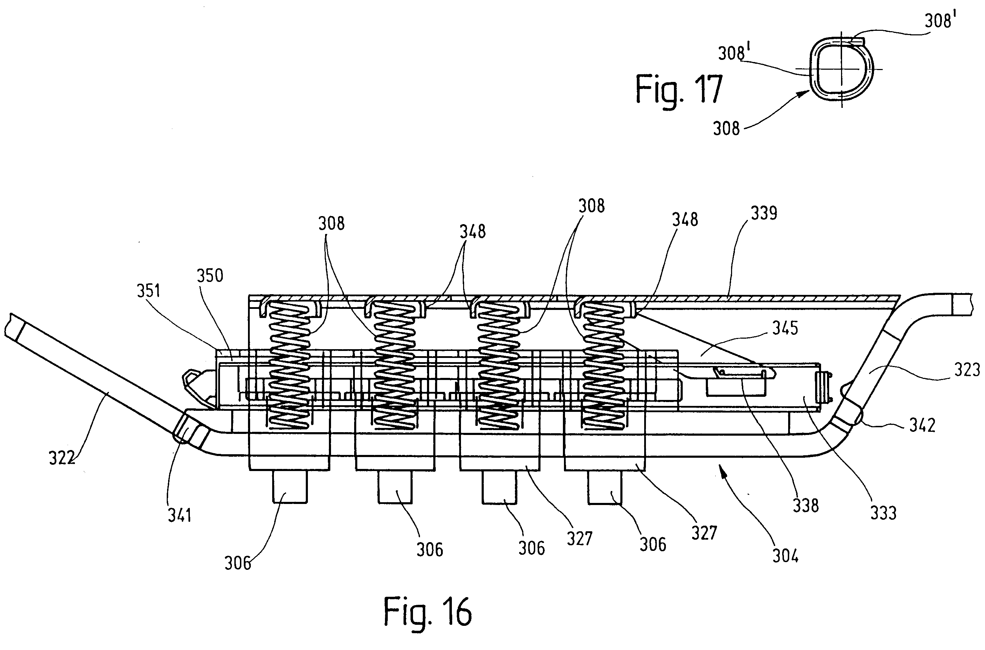

Aus dem Jochteil des Federgehäuses 339 sind für je eine Schraubenfeder 308 drei gegen den Schieber 331 weisende Lappen 348 herausgebogen, die, wie Fig. 16 zeigt, das obere Ende je einer der gleich ausgebildeten Schraubenfedern 308 aufnehmen, und zwar drehfest. Deshalb bildet zumindest die letzte Windung beider Federenden zwei geradlinige, im rechten Winkel zueinander verlaufende Abschnitt 308', wie dies Fig. 17 zeigt. Der Querschnitt des zentralen Aufnahmekanals 330 der Riegel 305, in den das andere Ende der zugeordneten Schraubenfeder 308 eingreift, ist so dimensioniert, daß auch in ihm das Federende drehfest gehalten wird.

Zwischen die beiden Seitenschienen 332 und 333 des Schiebers 331 greift, wie beispielsweise Fig. 15 zeigt, ein aus Kunststoff bestehender Hubkörper 350 ein, den die Innenseiten der Seitenschienen 332 und 333 relativ zum Schieber 331 sowohl in dessen Längsrichtung als auch in vertikaler Richtung führen. Der stabförmige Hubkörper 350 weist, wie beispielsweise Fig. 28 zeigt, längs seiner beiden oberen Längskanten verlaufende, seitlich überstehende Leisten 351 auf, welche von der Innenfläche der Seitenschienen 332 und 333 geführt werden. Für jeden der Riegel 305 ist der Hubkörper 350 mit einer Aufnahme 352 versehen, die den Mittelabschnitt 327 und den Flansch 328 je eines der Riegel 305 drehbar und axial verschiebbar aufzunehmen vermögen. Wie die Fig. 28 bis 30 erkennen lassen, sind die Aufnahmen 352 unterhalb der Leisten 351 seitlich offen. Auch zwischen den Aufnahmen 352 sind diese nicht vollständig voneinander abgetrennt. An dem gegen die Halterung 304 weisenden Ende ist jede der Aufnahmen 352 mit zwei gegen ihr Zentrum hin vorspringende Auflageleisten 353 versehen, welche den Flansch 328 untergreifen, um den Riegel 305 von der Flachschiene 301 abheben zu können.

Bei der Montage werden zunächst die Riegel 305 in die Aufnahmen 352 des Hubkörpers 350 eingesteckt. Anschließend wird der Hubkörper 350 in den Schieber 331 eingesetzt. Danach erfolgt das Einsetzen der Schraubenfedern 308, die nicht nur als Druckfedern, sondern auch als Drehfedern dienen, in den zentralen Aufnahmekanal 330 des zugeordneten Riegels 305. Nunmehr kann der Schieber 331 in das Federgehäuse 339 eingeklippst werden. Dabei kommen die Führungsnasen 338 in Eingriff mit den Fenstern 345. Anschließend wird das Federgehäuse 339 auf die Halterung 304 mit Hilfe der Vorsprünge 341 und 342 geklippst. Die Vorspannung wird den Schraubenfedern 308 vorzugsweise in der Weise gegeben, daß zunächst die Bolzen so weit gegen den Jochteil des Federgehäuses 339 gedrückt werden, bis der Flansch 328 den Hubkörper 350 verlassen hat. Nun kann der Riegel 305 um 180° gedreht und wieder abgesenkt werden. Die Drehvorspannung der Schraubenfedern 308 bleibt aufrechterhalten, weil die Abflachungen 329 der Flansche 328 in Anlage an den Seitenschienen 332 und 333 sind. Zum Schluß wird die Halterung 304 an die Oberschiene angeschraubt.

Wenn die Oberschiene 321 mit der Unterschiene 320 verriegelt ist, sind zwei der Riegel 305 mit ihren Nocken 312 in Eingriff mit je einer der Rastöffnungen 302 oder 302'. Die vorgespannten Schraubenfedern 308 halten den einen Nocken 312 der sich in der Verriegelungsstellung befindenden Riegel 305 in spielfreier Anlage an einem der Stege 303. Dadurch, daß der Endabschnitt 306 der Riegel 305 in Abhängigkeit von seiner Ausrichtung in die Rastöffnung 302 oder die Rastöffnung 302' einfällt, hat das Spiel, das mittels des Nockens 312 zu beseitigen ist, stets den kleinstmöglichen Wert. Es ist deshalb zweckmäßig, die Rastöffnungen 302 in Längsrichtung der Flachschiene 301 um den doppelten Betrag des Spieles, den ein Nocken 312 ausgleichen kann, größer zu machen als die Abmessung der Rastöffnung 302'. Die Drehung, welche der Riegel zur Beseitigung des Spieles ausführen muß, braucht deshalb höchstens 90° zu betragen.

Da die Reibung zwischen den Nocken 312 und der durch die Stege 303 gebildeten Anlageflächen nicht ausreicht, um bei den beim Betrieb des Fahrzeuges auftretenden Belastungen ein Zurückdrehen der Riegel 305 zu verhindern, sind die Riegel 305 in der Halterung 304 mit so viel Spiel angeordnet, daß die auf die Nocken 312 wirkende Kraft ein geringfügiges Kippen im Führungskanal bewirkt. Dabei wird der Mittelabschnitt 327 an beiden Enden des Führungskanals 324 zwischen den Abflachungen 326 festgeklemmt. Diese Klemmkraft reicht aus, um zu verhindern, daß der Riegel 305 durch die auf ihn im verriegelten Zustand wirkenden Kräfte gedreht wird.

Um die Oberschiene 321 für eine Bewegung in Längsrichtung der Unterschiene 320 freizugeben, wird der Schieber 331 mittels eines Zuges, der am Querteil 335 angreift und zu einem Betätigungsglied führt, zunächst translatorisch gegen den flachen Schenkel 322 der Halterung 304 bewegt. Dabei drehen die Schmalseiten seiner Fenster 336 alle diejenigen Flansche 328 im Sinne des Abhebens der Nocken 312 von den Stegen 303, die sich in der Sperrstellung befinden. Im Regelfall sind dies zwei der vier Riegel 305. Da in der Regel die Drehstellung der beiden Riegel 305, welche sich in der Verriegelungsstellung befinden, unterschiedlich ist, erfolgt bei der translatorischen Verschiebung des Schiebers 331 das Drehen der Riegel 305 nicht gleichzeitig. Vielmehr wird zunächst der am weitesten verdrehte Riegel 305 und dann erst der weniger weit verdrehte Riegel 305 zurückgedreht. Am Ende der parallel zur Flachschiene 301 verlaufenden Translationsbewegung des Schiebers 331 sind die Abflachungen 329 der Flansche 328 in Anlage an den Innenseiten der Seitenschiene 332, an welcher auch die Abflachungen 329 derjenigen Riegel 305 anlegen, welche sich nicht der Verriegelungsstellung befunden haben.

An diese Translationsbewegung des Schiebers 331 schließt sich eine kombinierte Translations- und Hubbewegung an, weil nunmehr der Querteil 335 vom Schenkel 322 und die Führungsnasen 338, die während der Translationsbewegung von dem horizontal verlaufenden Abschnitt 346 der Fenster 345 geführt worden sind, nunmehr vom Rampenabschnitt 347 geführt werden. Bei dieser Translations- und Hubbewegung wird der Schieber 331 relativ zu den Riegeln 305 angehoben. Dabei kommen die Abflachungen 329 der Flansche 328 in Anlage an Flächenbereiche unterhalb der Fenster 336. Nach dieser Hubbewegung des Schiebers 331 relativ zu den Riegeln 305 kommt der Schieber 331 mit seinen oberen, nach außen abgebogenen Randzonen in Anlage an die Unterseite der Leisten 351 des Hubkörpers 350. Letzterer führt bei der weiteren kombinierten Translations- und Hubbewegung des Schiebers 331 eine reine Hubbewegung aus, bei der, sobald die Flansche 328 in Anlage an den Auflageleisten 353 sind, die Riegel 305 so weit angehoben werden, daß der Endabschnitt 306 aller Riegel 305 in dem zugeordneten Führungskanal 324 der Halterung 304 verschwindet. Dank eines Zwischenraumes zwischen der Unterseite der Halterung 304 und der Oberseite der Flachschiene 301 läßt sich nun die Oberschiene 321 geräuschfrei relativ zur Unterschiene 320 verschieben.

In der neuen Position der Oberschiene 321 braucht nur das Betätigungsglied für den am Schieber 331 angreifenden Zug freigegeben zu werden. Eine nicht dargestellte, am Schieber angreifende Rückholfeder bewirkt nun zunächst die kombinierte Translations- und Hubbewegung in der entgegengesetzten Richtung und dann die Translationsbewegung. Dabei werden die Riegel 305 für ein Einfallen in die Rastöffnungen freigegeben. Diejenigen beiden Riegel 305, die auf zwei der Rastöffnungen 302 oder 302' ausgerichtet sind, fallen unter der Druckwirkung der sie beaufschlagenden Schraubenfedern 308 in je einer der Rastöffnungen ein. Außerdem bewirkt die Drehvorspannung der Schraubenfedern 308, daß die eingefallenen Riegel 305 so weit gedreht werden, bis die Nocken 312 spielfrei an den Stegen 303 anliegen und dadurch die Oberschiene 321 gegen eine Verschiebung in der Unterschiene 320 sichern.

## Patentansprüche

1. Verriegelungsvorrichtung für Fahrzeugsitze, insbesondere Kraftfahrzeugsitze, mit einer Reihe von Rastöffnungen (2; 202; 302; 302') und mehreren in Richtung dieser Reihe hintereinander angeordneten, federbelasteten Regeln (5; 105; 205; 305) die unabhängig voneinander in die Rastöffnungen einfallen können und von denen wenigstens zwei in jeder Position innerhalb des Verstellbereiches der zu verriegelnden, relativ zueinander stufenlos verstellbaren Teile in eine der Rastöffnungen einzufallen und diese Teile in beiden Verstellrichtungen spielfrei zu verriegeln vermögen, dadurch gekennzeichnet, daß jeder Riegel (5; 105; 205; 305) zusätzlich zu seiner Bewegbarkeit für das Einfallen in eine der Rastöffnungen (2; 202; 302, 302') eine Bewegbarkeit wenigstens eines der ihn bildenden Teile aufweist, bei welcher der für eine spielfreie Anlage an der Begrenzungsfläche dieser Rastöffnung (2; 202; 302, 302') vorgesehene Flächenbereich in Anlage an die Begrenzungsfläche gebracht wird, ohne die Eindringtiefe des Riegels (5; 105; 205; 305) in die Rastöffnung (2; 202; 302, 302') zu verändern.

2. Verriegelungsvorrichtung nach Anspruch 1, dadurch gekennzeichnet, daß von jedem Riegel (5; 305)
a) zumindest einer der Teile um die Riegellängsachse drehbar gelagert und mit einer Drehvorrichtung (9, 10; 331) gekuppelt ist,
b) zumindest in demjenigen Abschnitt (6; 306), der in der Verriegelungsstellung in eine der Rastöffnungen (2; 302; 302') eingreift, einen Querschnitt aufweist, dessen Randlinie zumindest auf einem Teil des Umfanges zwischen einer Stelle geringsten Abstandes von der Längsachse und einer Stelle größten Abstandes von der Längsachse einen stetig größer werdenden Abstand von der Längsachse des Riegels (5; 305) hat.

3. Verriegelungsvorrichtung nach Anspruch 2, dadurch gekennzeichnet, daß der in der Verriegelungsstellung in eine der Rastöffnungen (2; 302, 302') eingreifende Abschnitt (6; 306) mit dem ihn tragenden und mit der Drehvorrichtung (9, 10; 331) gekuppelten Teil (327) des Riegels (5; 305) einstückig ausgebildet oder drehfest verbunden ist.

4. Verriegelungsvorrichtung nach Anspruch 2, dadurch gekennzeichnet, daß derjenige Teil (106) des Riegels (105), dessen Querschnittsfläche von einer Randlinie mit stetig größer werdendem Abstand von der Riegellängsachse begrenzt ist, drehbar auf einem stabförmigen Teil (106') des Riegels (105) gelagert und mit der Drehvorrichtung gekuppelt ist.

5. Verriegelungsvorrichtung nach einem der Ansprüche 2 bis 4, dadurch gekennzeichnet, daß der in der Verriegelungsstellung in die Rastöffnung (2; 302, 302') eingreifende Teil (6; 106; 306) jedes Riegels (5; 105; 305) zwei diametral liegende Abschnitte der Randlinie seines Querschnittes hat, deren Abstände von der Längsachse des Riegels (5; 105; 305) im gleichen Umlaufsinne stetig größer werden.

6. Verriegelungsvorrichtung nach Anspruch 5, dadurch gekennzeichnet, daß die beiden diametral liegenden Abschnitte der Randlinie des Querschnittes des Abschnittes (6; 106; 306) jedes Riegels (5; 105; 305) punktsymmetrisch zu seiner Längsachse sind.

7. Verriegelungsvorrichtung nach einem der Ansprüche 2 bis 6, dadurch gekennzeichnet, daß die Steigung an jeder Stelle des einen stetig zunehmenden Abstand von der Längsachse aufweisenden Abschnittes der Randlinie des Querschnittes des Endabschnittes (6; 106;) des Riegels (5; 105) so gewählt ist, daß der Winkel, den die Randlinie an der Anlagestelle mit der Begrenzungsfläche der Rastöffnung (2) einschließt, im Selbsthemmungsbereich liegt.

8. Verriegelungsvorrichtung nach einem der Ansprüche 2 bis 7, dadurch gekennzeichnet, daß jeder einen stetig zunehmenden Abstand von der Längsachse des Riegels (5; 105) aufweisende Abschnitt (6; 106) der Randlinie die Form einer logarithmischen Spirale (11) hat.

9. Verriegelungsvorrichtung nach einem der Ansprüche 1 bis 8, dadurch gekennzeichnet, daß jedem Riegel (5) eine Sperre (13) zugeordnet ist, die ihn formschlüssig gegen eine Bewegung aus der Rastöffnung (2) heraus sichert.

10. Verriegelungsvorrichtung nach Anspruch 9, dadurch gekennzeichnet, daß die Sperre ein quer zur Verschieberichtung des Riegels (5) bewegbares Blockierelement (13) aufweist, an dem in seiner Sperrstellung das der Rastöffnung (2) abgekehrte Ende des Riegels (5) in der Entriegelungsrichtung formschlüssig anliegt.

11. Verriegelungsvorrichtung nach Anspruch 1, dadurch gekennzeichnet, daß jeder Riegel (205) einen stabförmigen Teil (206'), welcher in der Verriegelungsstellung in eine der Rastöffnungen (202) eingreift, sowie wenigstens einen Keilkörper (214, 215) aufweist, der längsverschiebbar auf dem stabförmigen Körper (206') angeordnet ist und mit seinem Keil (214', 215) in den gegebenenfalls vorhandenen Spalt zwischen dem stabförmigen Körper (206') und der ihm am nächsten liegenden Anlagefläche der Rastöffnung (202) bis zur Anlage an dieser Anschlagfläche bewegbar ist.

12. Verriegelungsvorrichtung nach Anspruch 11, gekennzeichnet durch einen zweiten Keilkörper (215), der den ersten Keilkörper (214) umfaßt und auf diesem längsverschiebbar angeordnet ist.

13. Verriegelungsvorrichtung nach Anspruch 11 oder 12, dadurch gekennzeichnet, daß jeder vorhandene Keilkörper (214, 215) im gleichen Sinne wie der stabförmige Teil (206') federbelastet ist.

14. Verriegelungsvorrichtung nach einem der Ansprüche 1 bis 13, dadurch gekennzeichnet, daß auf jede der Rastöffnungen (302) wenigstens eine zusätzliche Rastöffnung (302') ausgerichtet ist, die auf der dem Riegel (305) abgekehrten Seite der erstgenannten Rastöffnung (302) liegt und zumindest in derjenigen Richtung, in welcher eine spielfreie Verriegelung herzustellen ist, eine kleinere Abmessung hat als die erstgenannte Rastöffnung (302).

15. Verriegelungsvorrichtung nach Anspruch 14, dadurch gekennzeichnet, daß die Abmessung der zusätzlichen Rastöffnung (302') in derjenigen Richtung, in welcher eine spielfreie Verriegelung herzustellen ist, um das maximale Spiel, das der Riegel (305) zu beseitigen vermag, kleiner ist als die entsprechende Abmessung der anderen Rastöffnung (302).

16. Verriegelungsvorrichtung nach einem der Ansprüche 1 bis 11 sowie 14 oder 15, gekennzeichnet durch eine allen Riegeln (305) gemeinsame Dreh- und Aushebevorrichtung (331, 350).

17. Verriegelungsvorrichtung nach Anspruch 16, dadurch gekennzeichnet, daß die Dreh- und Aushebevorrichtung (331, 350) mit einer allen Riegeln (305) gemeinsamen Halterung (304), die je einen Führungskanal (324) für jeden der Riegel (305) aufweist, sowie einer Haltevorrichtung (339) für jede der die Riegel (305) belastenden Federn (308) zu einer Baueinheit vereinigt ist.

18. Verriegelungsvorrichtung nach Anspruch 17, dadurch gekennzeichnet, daß die die Riegel (305) belastenden Federn (308) als Schraubendruck-Drehfedern ausgebildet sind, deren letzte Windung an beiden Enden wenigstens zwei geradlinige und gegeneinander abgewinkelte Abschnitte (308') aufweist für eine drehfeste Verbindung mit dem Riegel (305) einerseits und der Haltevorrichtung (339) andererseits.

19. Verriegelungsvorrichtung nach Anspruch 17 oder 18, dadurch gekennzeichnet, daß die Führungskanäle (324) der Halterung (304), in denen je ein zylindrischer Abschnitt (327) des zugeordneten Riegels (305) drehbar und axial verschiebbar mit Spiel geführt ist, ein Querschnittsprofil haben, das in jedem Quadranten eine Abflachung (326) aufweist, und daß diese Abflachungen (326) paarweise je einen Keil definieren, von denen der eine in der einen Richtung der Reihe von Führungskanälen (324) und der andere in der entgegengesetzten Richtung weist.

20. Verriegelungsvorrichtung nach einem der Ansprüche 16 bis 19, dadurch gekennzeichnet, daß alle der gleich ausgebildeten Riegel (305) an demjenigen Ende ihres zylindrischen Mittelabschnittes (327), der dem in die Rastöffnungen (302, 302') eingreifenden Endabschnitt (306) abgekehrt ist, einen radial nach außen überstehenden Flansch (328) aufweisen, der an wenigstens einer Stelle mit einer Abflachung (329) versehen ist, die parallel zu der von den Riegeln (305) gebildeten Reihe verläuft, wenn der Riegel (305) sich in derjenigen Drehstellung befindet, in welcher er in eine der Rastöffnungen (302, 302') einzufallen vermag und aus ihr vollständig ausgehoben werden kann.

21. Verriegelungsvorrichtung nach einem der Ansprüche 17 bis 20, dadurch gekennzeichnet, daß die Dreh- und Aushebevorrichtung (331, 350) einen sich in Richtung der von den Riegeln (305) und den Rastöffnungen (302, 302') gebildeten Reihe erstreckenden und in dieser Richtung mittels einer Betätigungsvorrichtung entgegen der Kraft einer Rückstellfeder bewegbaren Schieber (331) aufweist, der in einer Seitenwand (332) für jeden Flansch (328) mit einem Fenster (336) versehen ist, in welches in der Verriegelungsstellung der die Abflachung (329) aufweisende Teil des Flansches (328) eingreift.

22. Verriegelungsvorrichtung nach Anspruch 21, dadurch gekennzeichnet, daß die Haltevorrichtung (339) und/oder die Halterung (304) Führungsflächen (323, 346, 347) für den Schieber (331) aufweisen, die beim Lösen der Verriegelung dem Schieber (331) nach einer Translationsbewegung, während deren alle Riegel (305) in die der Aushebungsstellung entsprechende Drehstellung gebracht werden, eine kombinierte Translations- und Hubbewegung erteilen.

23. Verriegelungsvorrichtung nach Anspruch 21 oder 22, dadurch gekennzeichnet, daß in den Schieber (331) in dessen Bewegungsrichtung und der Einfall- und Ausheberichtung der Riegel (305) relativ zum Schieber (331) bewegbar von der der Halterung (304) abgewandten Seite her ein Hubkörper (350) eingreift, der für jeden der Riegel (305) mit je einer auf die Führungskanäle (324) ausgerichteten Aufnahme (352) versehen ist, in denen je einer der Riegel (305) drehbar und axial verschiebbar gelagert ist, und daß jede Aufnahme (352) an ihrem gegen den Führungskanal (324) weisenden Ende eine eine Auflagefläche für den Flansch (328) bildende Materialpartie (353) aufweist.

24. Verriegelungsvorrichtung nach Anspruch 23, dadurch gekennzeichnet, daß der Hubkörper (350) an seinem oberen Rand je eine über die beiden Seitenwände nach außen überstehende, leistenförmige Materialpartie (351) aufweist, an deren Unterseite der Schieber (331) zu Beginn seiner Hubbewegung in Anlage kommt.

25. Verriegelungsvorrichtung nach einem der Ansprüche 16 bis 24, gekennzeichnet durch Klippelemente (341, 342) für die Klemmverbindungen zwischen dem mit dem Hubkörper (350) vereinigten Schieber (331) und der Haltevorrichtung (339) sowie für die Verbindung der Haltevorrichtung (339) mit der Halterung (304).

## Claims

1. Locking device for vehicle seats, especially motor vehicle seats, having a row of snap-in openings (2; 202; 302; 302') and a plurality of spring-loaded bolts (5; 105; 205; 305) arranged one behind the other in the direction of that row, which bolts ore able to full into the snap-in openings independently of one another and at least two of which are able to fall into one of the snap-in openings in any position within the range of adjustment of the parts to be locked, which are infinitely adjustable relative to one another, and lock those parts in both directions of adjustment in a manner that is free from play, characterised in that each bolt (5; 105; 205; 305), in addition to being movable for the purpose of falling into one of the snap-in openings (2; 202; 302, 302'), exhibits movement of at least one of its component parts, in which the surface region provided to rest in a play-free manner on the periphery of the snap-in opening (2; 202; 302, 302') is brought to rest on the periphery without changing the depth of penetration of the bolt (5; 105; 205; 305) into the snap-in opening (2; 202; 302, 302').

2. Locking device according to claim 1, characterised in that for each bolt (5; 305)
a) at least one of the parts is mounted in rotation about the longitudinal axis of the bolt and is coupled to a turning device (9, 10; 331),
b) at least the section (6; 306) that in the locking position engages into one of the snap-in openings (2; 302; 302') has a cross-section the edge of which is at a continuously increasing distance from the longitudinal axis of the bolt (5; 305) at least over a portion of the periphery between a point of minimum distance from the longitudinal axis and a point of maximum distance from the longitudinal axis.

3. Locking device according to claim 2, characterised in that the section (6; 306) that in the locking position engages into one of the snap-in openings (2; 302, 302') is constructed in one piece with or is connected in non-rotary manner to the part (327) of the bolt (5; 305) that carries it and that is coupled to the turning device (9, 10; 331).

4. Locking device according to claim 2, characterised in that the part (106) of the bolt (105) whose cross-sectional area is limited by an edge that is at a continuously increasing distance from the longitudinal axis of the bolt is mounted in rotation on a rod-like part (106') of the bolt (105) and is coupled to the turning device.

5. Locking device according to any one of claims 2 to 4, characterised in that the part (6; 106; 306) of each bolt (5; 105; 305) that in the locking position engages into the snap-in opening (2; 302, 302') has two sections of the edge of its cross-section lying diametrally, the distances of which sections from the longitudinal axis of the bolt (5; 105; 305) increase continuously in the same direction of rotation.

6. Locking device according to claim 5, characterised in that the two diametrally lying sections of the edge of the cross-section of the section (6; 106; 306) of each bolt (5; 105; 305) are point-symmetrical to its longitudinal axis.

7. Locking device according to any one of claims 2 to 6, characterised in that the gradient at each point of the section of the edge of the cross-section of the terminal section (6, 106) of the bolt (5; 105) that is at a continuously increasing distance from the longitudinal axis is so selected that the angle enclosed by the edge at the point of contact with the periphery of the snap-in opening (2) lies within the self-locking range.

8. Locking device according to any one of claims 2 to 7, characterised in that each section (6; 106) of the edge that is at a continuously increasing distance from the longitudinal axis of the bolt (5; 105) has the form of a logarithmic spiral (11).

9. Locking device according to any one of claims 1 to 8, characterised in that each bolt (5) has an associated stop (13) that secures it in a positively locking manner against moving out of the snap-in opening (2).

10. Locking device according to claim 9, characterised in that the stop has a blocking element (13) which is movable transversely to the direction of displacement of the bolt (5) and against which, in its stop position, the end of the bolt (5) remote from the snap-in opening (2) rests in a positively locking manner in the direction of release.

11. Locking device according to claim 1, characterised in that each bolt (205) has a rod-like part (206') which in the locking position engages into one of the snap-in openings (202), and at least one wedge-shaped body (214, 215) which is arranged on the rod-like body (206') in a longitudinally displaceable manner and the wedge (214', 215) of which can be moved into the gap that may be present between the rod-like body (206') and the bearing surface of the snap-in opening (202) located closest to it, until it comes to rest against that stop surface.

12. Locking device according to claim 11, characterised by a second wedge-shaped body (215) which surrounds the first wedge-shaped body (214) and is arranged in a longitudinally displaceable manner thereon.

13. Locking device according to claim 11 or 12, characterised in that each wedge-shaped body (214, 215) present is spring-loaded in the same direction as the rod-like part (206').

14. Locking device according to any one of claims 1 to 13, characterised in that there is aligned with each of the snap-in openings (302) at least one additional snap-in opening (302') which is located on the side of the first-mentioned snap-in opening (302) remote from the bolt (305) and, at least in the direction in which play-free locking is to be produced, is smaller in size than the first-mentioned snap-in opening (302).

15. Locking device according to claim 14, characterised in that the size of the additional snap-in opening (302') in the direction in which play-free locking is to be produced is smaller than the corresponding size of the other snap-in opening (302) by the maximum play that the bolt (305) is capable of eliminating.

16. Locking device according to any one of claims 1 to 11 and 14 or 15, characterised by a turning and lifting device (331, 350) that is common to all the bolts (305).

17. Locking device according to claim 16, characterised in that the turning and lifting device (331, 350) is combined to form a structural unit with a mounting (304), common to all the bolts (305), which has a guide channel (324) for each of the bolts (305), and with a holding device (339) for each of the springs (308) loading the bolts (305).

18. Locking device according to claim 17, characterised in that the springs (308) loading the bolts (305) are in the form of compression/torsion springs whose last turn has at both ends at least two straight sections (308') that are at an angle relative to each other for non-rotary connection to the bolt (305) on the one hand and the holding device (339) on the other hand.

19. Locking device according to claim 17 or 18, characterised in that the guide channels (324) in the mounting (304), in each of which a cylindrical section (327) of the associated bolt (305) is guided in a rotary and axially displaceable manner with play, have a cross-sectional profile that has a flattened portion (326) in each quadrant, and in that two of those flattened portions (326) define a wedge, of which one points in one direction of the row of guide channels (324) and the other points in the opposite direction.

20. Locking device according to any one of claims 16 to 19, characterised in that all the bolts (305), which have the same construction, have at the end of their cylindrical middle section (327) that is remote from the terminal section (306) that engages into the snap-in openings (302, 302') a flange (328) that projects radially outwards and that is provided at at least one point with a flattened portion (329) which extends parallel to the row formed by the bolts (305) when the bolt (305) is in that rotary position in which it is able to fall into one of the snap-in openings (302, 302') and be lifted therefrom completely.

21. Locking device according to any one of claims 17 to 20, characterised in that the turning and lifting device (331, 350) has a slide (331) that extends in the direction of the row formed by the bolts (305) and the snap-in openings (302, 302') and that is movable in that direction against the force of a return spring by means of an operating device, which slide (331) is provided in a side wall (332) with a window (336) for each flange (328), into which window the part of the flange (328) having the flattened portion (329) engages in the locking position.

22. Locking device according to claim 21, characterised in that the holding device (339) and/or the mounting (304) has/have guide surfaces (323, 346, 347) for the slide (331), which guide surfaces, when the locking is released, Impart to the slide (331), after a translational movement during which all the bolts (305) are brought into the rotary position corresponding to the lifting position, a combined translational and lifting movement.

23. Locking device according to claim 21 or claim 22, characterised in that a lifting body (350) engages into the slide (331) in the direction of movement thereof and in the direction in which the bolts (305) fall in and are lifted out, movable relative to the slide (331), from the side remote from the mounting (304), which lifting body (350) has for each of the bolts (305) a recess (352) aligned with the guide channels (324), in each of which recesses one of the bolts (305) is mounted in a rotary and axially displaceable manner, and in that each recess (352) has at its end facing the guide channel (324) a section of material (353) forming a bearing surface for the flange (328).

24. Locking device according to claim 23, characterised in that the lifting body (350) has at its upper edge a strip-like section of material (351) which projects outwards over the two side walls and against the underside of which the slide (331) comes to rest at the beginning of its lifting movement.

25. Locking device according to any one of claims 16 to 24, characterised by clip members (341, 342) for the clamping connections between the slide (331), combined with the lifting body (350), and the holding device (339), and for connecting the holding device (339) to the mounting (304).

## Revendications

1. Dispositif de verrouillage pour sièges de véhicules, notamment pour sièges de camions, comprenant une rangée d'ouvertures d'arrêt (2 ; 202 ; 302, 302') et plusieurs verrous (5 ; 105 ; 205 ; 305) sollicités par ressorts, disposés l'un après l'autre dans la direction de ladite rangée, qui peuvent rentrer indépendamment l'un de l'autre dans les ouvertures d'arrêt et dont au moins deux peuvent, dans chaque position de la plage de manoeuvre de deux pièces, manoeuvrables graduellement l'une par rapport à l'autre et verrouillables ensemble, pénétrer dans une des ouvertures d'arrêt et verrouiller sans jeu les deux pièces dans les deux directions de manoeuvre, dispositif caractérisé en ce que chaque verrou (5 ; 105 ; 205 ; 305) comporte, en addition à sa possibilité de mouvement pour la pénétration dans une des ouvertures d'arrêt (2 ; 202 ; 302, 302') une possibilité de déplacement d'au moins une des parties le constituant, de telle sorte que la zone superficielle prévue pour une application sans jeu contre la surface de délimitation de cette ouverture d'arrêt (2 ; 202 ; 302, 302') vienne s'appliquer contre la surface de délimitation, sans modification de la profondeur de pénétration dit verrou (5 ; 105 ; 205 ; 305) dans l'ouverture d'arrêt (2 ; 202 ; 302, 302').

2. Dispositif de verrouillage selon la revendication 1, caractérisé en ce que pour chaque verrou (5 ; 305)
a) au moins une ses parties est montée de façon à pouvoir tourner autour de l'axe longitudinal dit verrou et est accouplée à un dispositif d'entraînement en rotation (9, 10 ; 331),
b) au moins la partie (6 ; 306) qui est engagée dans la position de verrouillage dans une des ouvertures d'arrêt (2 ; 302, 302') comporte une section droite dont le bord, au moins sur une partie du pourtour entre une zone espacée au minimum de l'axe longitudinal et une zone espacée au maximum de l'axe longitudinal, présente par rapport à l'axe longitudinal du verrou (5 ; 305) un espacement qui augmente progressivement.

3. Dispositif de verrouillage selon la revendication 2 , caractérisé en ce que la partie (6 ; 306) pénétrant dans la position de verrouillage dans une des ouvertures d'arrêt (2 ; 302, 302') forme une même pièce, ou est reliée de façon non tournante, avec la partie (327) dit verrou (3 ; 305) qui la supporte et qui est accouplée ait dispositif d'entraînement en rotation (9, 10 ; 331).

4. Dispositif de verrouillage selon la revendication 2 , caractérisé en ce que la partie (106) du verrou (105), dont la surface de section est délimitée par un bord dont l'espacement par rapport à l'axe longitudinal du verrou augmente progressivement, est montée de façon tournante sur une partie en forme de barreau (106') du verrou (105) et est accouplée au dispositif d'entraînement en rotation.

5. Dispositif de verrouillage selon une des revendications 2 à 4 , caractérisé en ce que la partie (6 ; 106 ; 306) de chaque verrou (5 ; 105 ; 305), s'engageant dans la position de verrouillage dans l'ouverture d'arrêt (2 ; 302,302') comporte deux zones diamétralement opposées du bord de sa section dont les espacements par rapport à l'axe longitudinal du verrou (5 ; 105 ; 305) augmentent progressivement dans la même direction circonférencielle).

6. Dispositif de verrouillage selon la revendication 5 , caractérisé en ce que les deux zones diamétralement opposées du bord de la section de la partie (6 ; 106 ; 306) de chaque verrou (5 ; 105 ; 305) ont une symétrie ponctuelle par rapport à son axe longitudinal.

7. Dispositif de verrouillage selon une des revendications 2 à 6, caractérisé en ce que l'inclinaison en chaque point de la zone du bord de la section de la partie extrême (6 ; 106) du verrou (5 ; 105), comportant par rapport à l'axe longitudinal un espacement qui augmente progressivement, est choisie de telle sorte que l'angle que fait le bord, dans la zone d'appui, avec la surface de délimitation de l'ouverture d'arrêt (2) soit situé dans un domaine d'irréversibilité.

8. Dispositif de verrouillage selon une des revendications 2 à 7 , caractérisé en ce que chaque partie (6 ; 106) du bord, qui est espacée de l'axe longitudinal du verrou (5 ; 105) d'une distance augmentant progressivement, a la forme d'une spirale logarithmique (11).

9. Dispositif de verrouillage selon une des revendications 1 à 8, caractérisé en ce que chaque verrou (5) est associé à un organe d'arrêt (13), qui produit son blocage par conjugaison de formes en l'empêchant de sortir de l'ouverture d'arrêt (2).

10. Dispositif de verrouillage selon la revendication 9, caractérisé en ce que l'organe d'arrêt comprend un élément de blocage (13) déplaçable perpendiculairement à la direction de translation du verrou (5) et contre lequel, dans sa position d'arrêt, l'extrémité, opposée à l'ouverture d'arrêt (2) du verrou, (5) vient s'appliquer dans la direction de déverrouillage et avec conjugaison de formes.

11. Dispositif de verrouillage selon la revendication 1, caractérisé en ce que chaque verrou (205) comporte une partie (206') en forme de barreau, qui pénètre dans la position de verrouillage dans une des ouvertures d'arrêt (202), ainsi qu'au moins un corps en forme de coin (214, 215) qui est disposé avec possibilité de translation longitudinale sur le corps (206') en forme de barreau et qui est déplaçable avec sa partie en forme de coin (214', 215) dans l'intervalle existant éventuellement entre le corps en forme de barreau (206') et la surface d'appui, la plus rapprochée de lui, de l'ouverture d'arrêt (202) jusqct'à une application contre cette surface d'appui.

12. Dispositif de verrouillage selon la revendication 11, caractérisé en ce qu'il est prévu un second corps en forme de coin (215) qui entoure le premier corps en forme de coin (214) et qui est disposé sur celui-ci avec possibilité de translation longitudinale.

13. Dispositif de verrouillage selon une des revendication 11 ou 12, caractérisé en ce que chaque corps en forme de coin (214, 215) est sollicité élastiquement dans le même sens que la partie en forme de barreau (206').

14. Dispositif de verrouillage selon une des revendications 1 à 13, caractérisé en ce que chacune des ouvertures d'arrêt (302) est alignée avec au moins une ouverture d'arrêt additionnelle (302'), qui est située sur le côté, opposé au verrou (305), de l'ouverture d'arrêt précitée (302) et qui a, au moins dans la direction dans laquelle au moins un verrouillage sans jeu doit être établi, une plus petite dimension que l'ouverture d'arrêt précitée (302).

15. Dispositif de verrouillage selon la revendication 14 , caractérisé en ce que la dimension de l'ouverture d'arrêt additionnelle (302') est réglé, dans la direction dans laquelle un verrouillage sans jeu doit être établi, a une valeur plus petite, d'une valeur correspondant au jeu maximal que le verrou (305) doit éliminer, que la dimension correspondante de l'autre ouverture d'arrêt (302).

16. Dispositif de verrouillage selon une des revendications 1 à 11 et 14 ou 15, caractérisé par un dispositif d'entraînement en rotation et de soulèvement (331, 350), qui est commun à tous les verrous (305).

17. Dispositif de verrouillage selon la revendication 16, caractérisé en ce que le dispositif d'entraînement en rotation et de soulèvement (331, 350) est combiné, sous forme d'un ensemble unitaire, avec un support (304) commun à tous les verrous (305) et comportant un canal de guidage (324) pour chacun des verrous (305), ainsi qu'avec un dispositif de retenue (339) pour chacun des ressorts (308) sollicitant les verrous (305).

18. Dispositif de verrouillage selon la revendication 17, caractérisé en ce que les ressorts (308) sollicitant les verrous (305) sont agencés comme des ressorts hélicoïdaux de pression et de torsion dont la dernière spire comporte aux deux extrémités au moins deux parties (308') rectilignes et recourbées l'une vers l'autre pour établir une liaison non tournante d'une part avec le verrou (305) et d'autre part avec le dispositif de retenue (339).

19. Dispositif de verrouillage selon une des revendications 17 ou 18, caractérisé en ce que les canaux de guidage (324) du support (304), dans chacun desquels une partie cylindrique (327) du verrou correspondant (305) est guidée avec du jeu et avec possibilité de rotation et de translation axiale, ont un profil de section droite qui comporte dans chaque quadrant un méplat (326) et en ce que ces méplats (326) définissent par paire, respectivement un coin, dont l'un est orienté dans une direction de la rangée de canaux de guidage (324) et l'autre est orienté dans la direction opposée.

20. Dispositif de verrouillage selon une des revendications 16 à 19, caractérisé en ce que tous les verrous (305) de conception identique comportent, à l'extrémité de leur partie centrale cylindrique (327), qui est opposée à la partie extrême (306) s'engageant dans les ouvertures d'arrêt (302, 302'), une collerette (328) faisant saillie radialement vers l'extérieur et qui est pourvue en au moins un endroit, d'un méplat (329) orienté parallèlement à la rangée formée par les verrous (305), quand le verrou (305) se trouve dans une position angulaire dans laquelle il peut pénétrer dans une des ouvertures d'arrêt (302, 302') et sortir complètement de celle-ci.

21. Dispositif de verrouillage selon une des revendications 17 à 20, caractérisé en ce que le dispositif d'entraînement en rotation et de soulèvement (331, 350) comprend un coulisseau (331), s'étendant dans la direction de la rangée formée par les verrous (305) et les ouvertures d'arrêt (302, 302') et déplaçable dans cette direction au moyen d'un dispositif d'actionnement et en opposition à la force d'un ressort de rappel, ce coulisseau étant pourvu, dans une paroi latérale (332) et pour chaque collerette (328), d'une fenêtre (336) dans laquelle s'engage, dans la position de verrouillage, la partie de la collerette (328) comportant le méplat (329).

22. Dispositif de verrouillage selon la revendication 21, caractérisé en ce que le dispositif de retenue (339) et/ou le support (304) comportent pour le coulisseau (331) des surfaces de guidage (323, 346, 347) qui, lors de la libération du verrouillage, produisent pour le coulisseau (331), après un mouvement de translation pendant lequel tous les verrous (305) ont été amenés dans la position angulaire correspondant à la position de soulèvement, un mouvement combiné de translation et de déplacement vertical.

23. Dispositif de verrouillage selon une des revendications 21 ou 22 caractérisé en ce qu'il est prévu un corps élévateur (350), déplaçable dans le coulisseau (331) dans sa direction de mouvement et dans la direction de descente et de soulèvement des verrous (305) par rapport au coulisseau (331) à partir du côté opposé au support (304), ce corps élévateur étant pourvu, pour chacun des verrous (305), d'une zone réceptrice (352) dirigée vers les canaux de guidage (324) et dans laquelle le verrou correspondant (305) est monté de façon à pouvoir tourner et effectuer une translation axiale, et en ce que chaque zone réceptrice (352) comporte, à son extrémité dirigée vers le canal de guidage (324), une partie (353) formant une surface d'appui pour la collerette (328).

24. Dispositif de verrouillage selon la revendication 23, caractérisé en ce que le corps élévateur (350) comporte sur son bord supérieur une partie (351) en forme de bordure faisant saillie extérieurement des deux parois latérales et contre le côté inférieur de laquelle vient s'appliquer le coulisseau (331) au début de son mouvement de montée.

25. Dispositif de verrouillage selon une des revendications 16 à 24, caractérisé en ce qu'il est prévu des éléments d'emboîtement (341, 342) pour établir les liaisons de blocage entre le coulisseau (331) associé au corps élévateur (350) et le dispositif de retenue (339) ainsi que pour établir la liaison entre le dispositif de retenue (339) et le support (304).
